# FASCICULE DE BREVET EUROPEEN

(11) **EP 1 907 508 B1**
(45) Date de publication et mention de la délivrance du brevet: **30.04.2014**
(21) Numéro de dépôt: 06794189.8
(22) Date de dépôt: 17.07.2006
(51) Int. Cl.: C10G 2/00, C10G 45/38, C10G 47/14

(54) **PROCEDE DE PRODUCTION DE DISTILLATS MOYENS PAR HYDROISOMERISATION ET HYDROCRAQUAGE DE CHARGES ISSUES DU PROCEDE FISCHER-TROPSCH UTILISANT UN LIT DE GARDE MULTIFONCTIONNEL**
VERFAHREN ZUR HERSTELLUNG VON MITTLEREN DESTILLATEN DURCH HYDROISOMERISIERUNG UND WASSERSTOFFSPALTUNG VON EINSÄTZEN AUS DEM FISCHER-TROPSCH VERFAHREN UNTER VERWENDUNG EINES MULTIFUNKTIONELLEN WACHBETTS
METHOD FOR PRODUCING MIDDLE DISTILLATES BY HYDROISOMERIZATION AND HYDROCRACKING OF FEEDS DERIVED FROM A FISCHER-TROPSCH PROCESS USING A MULTIFUNCTIONAL GUARD BED

(30) Priorité: 18.07.2005 FR 0507576
(43) Date de publication de la demande: 09.04.2008
(73) Titulaire: Institut Français du Pétrole, 92852 Rueil Malmaison Cedex (FR); ENI S.p.A., 00144 Roma (IT)
(72) Inventeur: EUZEN, Patrick, F-75001 Paris (FR); CALEMMA, Vincenzo, I-20097 San Donato Milanese (IT)
(86) Numéro de dépôt international: PCT/FR2006/001742
(87) Numéro de publication internationale: WO 2007/010126

(56) Documents cités:
- EP-A- 0 583 836
- WO-A-03/004583
- WO-A-03/004584
- WO-A-03/004586
- WO-A-03/004587
- WO-A-2004/076598
- US-A- 5 378 348
- US-A1- 2004 232 045

## Description

La présente invention concerne un procédé de traitement avec hydrocraquage et hydroisomérisation, de charges issues du procédé Fischer-Tropsch, permettant d'obtenir des distillats moyens (gazole, kérosène) mettant en oeuvre une étape d'hydrotraitement et épuration et/ou décontamination par passage sur un lit de garde comprenant au moins un catalyseur imprégné par une phase active hydro-déshydrogénante à base de nickel et de molybdène sur un support alumine, ayant des caractéristiques poreuses particulières.

Dans le procédé Fischer-Tropsch, le gaz de synthèse (CO+H₂) est transformé catalytiquement en produits oxygénés et en hydrocarbures essentiellement linéaires sous forme gazeuse, liquide ou solide. Ces produits sont généralement exempts d'impuretés hétéroatomiques telles que, par exemple, le soufre, l'azote ou des métaux. Ils ne contiennent également pratiquement peu ou pas d'aromatiques, de naphtènes et plus généralement de cycles en particulier dans le cas de catalyseurs au cobalt. Par contre, ils peuvent présenter une teneur non négligeable en produits oxygénés qui, exprimée en poids d'oxygène, est généralement inférieure à 5% poids environ et également une teneur en insaturés (produits oléfiniques en général) généralement inférieure à 10% en poids. Cependant, ces produits, principalement constitués de normales paraffines, ne peuvent être utilisés tels quels, notamment à cause de leurs propriétés de tenue à froid peu compatibles avec les utilisations habituelles des coupes pétrolières. Par exemple, le point d'écoulement d'un hydrocarbure linéaire contenant 20 atomes de carbone par molécule (température d'ébullition égale à 340°C environ c'est à dire souvent comprise dans la coupe distillat moyen) est de +37°C environ ce qui rend son utilisation impossible, la spécification étant de -15°C pour le gasoil. Les hydrocarbures issus du procédé Fischer-Tropsch comprenant majoritairement des n-paraffines doivent être transformés en produits plus valorisables tels que par exemple le gazole, kérosène, qui sont obtenus, par exemple, après des réactions catalytiques d'hydroisomérisation.

Le brevet EP-583,836 décrit un procédé pour la production de distillats moyens à partir de charge obtenue par la synthèse Fischer-Tropsch. Dans ce procédé, la charge est traitée dans sa globalité, tout au plus on peut enlever la fraction C₄ moins et obtenir la fraction C₅⁺ bouillant à près de 100°C. Ladite charge est soumise à un hydrotraitement puis à une hydroisomérisation avec une conversion (de produits bouillant au-dessus de 370°C en produits à point d'ébullition inférieur) d'au moins 40% poids. Un catalyseur utilisable en hydroconversion est une formulation platine sur silice-alumine. Les conversions décrites dans les exemples sont d'au plus 60% poids.

Le brevet EP-321,303 décrit également un procédé de traitement desdites charges en vue de produire des distillats moyens et éventuellement des huiles. Dans un mode de réalisation, des distillats moyens sont obtenus par un procédé consistant à traiter la fraction lourde de la charge, c'est à dire à point d'ébullition initial compris entre 232°C et 343°C, par hydroisomérisation sur un catalyseur fluoré contenant un métal du groupe VIII et de l'alumine et présentant des caractéristiques physico-chimiques particulières. Après hydroisomérisation, l'effluent est distillé et la partie lourde est recyclée en hydroisomérisation. La conversion en hydroisomérisation des produits 370°C+ est donnée comme comprise entre 50-95% pds et les exemples vont jusqu'à 85-87%.

Tous les catalyseurs utilisés actuellement en hydroisomérisation sont du type bifonctionnels associant une fonction acide à une fonction hydrogénante. La fonction acide est apportée par des supports de grandes surfaces (150 à 800 m².g⁻¹ généralement) présentant une acidité superficielle, telles que les alumines halogénées (chlorées ou fluorées notamment), les alumines phosphorées, les combinaisons d'oxydes de bore et d'aluminium, les silices-alumines amorphes et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions acide et hydrogénante est l'un des paramètres qui régissent l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Cependant les fractions lourdes traitées peuvent éventuellement contenir des particules solides tels que des solides minéraux. Elles peuvent éventuellement contenir des métaux contenus dans des structures hydrocarbonés tels que des composés organo-métalliques plus ou moins solubles. Par le terme fines, on entend des fines résultant d'une attrition physique ou chimique du catalyseur. Elles peuvent être microniques ou sub-microniques. Ces particules minérales contiennent alors les composants actifs de ces catalyseurs sans que la liste suivante soit limitative : alumine, silice, titane, zircone, oxyde de cobalt, oxyde de fer, tungstène, oxyde de rhuthénium... Ces solides minéraux peuvent se présenter sous la forme d'oxyde mixte calciné : par exemple, alumine-cobalt, alumine-fer, alumine-silice, alumine-zircone, alumine-titane, alumine-silice-cobalt, alumine-zircone-cobalt,....

Elles peuvent également contenir des métaux au sein de structures hydrocarbonés, pouvant éventuellement contenir de l'oxygène ou des composés organo-métalliques plus ou moins solubles. Plus particulièrement, ces composés peuvent être à base de silicium. Il peut s'agir par exemple des agents anti-moussants utilisés dans le procédé de synthèse. Par exemple, les solutions d'un composé du silicium de type silicone ou émulsion d'huile silicone sont plus particulièrement contenus dans la fraction lourde.

Par ailleurs, les fines de catalyseurs décrites ci-dessus peuvent avoir une teneur en silice supérieure à la formulation du catalyseur, résultant de l'interaction intime entre les fines de catalyseurs et des agents anti-moussants décrits ci-dessus.

Le problème qui est alors posé est de réduire la teneur en particules minérales solides et éventuellement réduire la teneur en composés métalliques néfastes pour le catalyseur d'hydroisomérisation-hydrocraquage.

L'étape d'hydrotraitement permet généralement de réduire la teneur en composés oléfiniques et insaturés ainsi que d'hydrotraiter les composés oxygénés (alcools) présents. Les efforts de recherche de la demanderesse l'ont conduite à trouver que l'utilisation d'un lit de garde multifonctionnel dans cette étape d'hydrotraitement permettait en outre d'épurer et/ou décontaminer la charge arrivant sur le catalyseur d'hydrosiomérisation/hydrocraquage et ainsi d'améliorer les performances de ce dernier catalyseur.

La présente invention concerne donc un procédé amélioré pour la production de distillats moyens. Ce procédé permet :
- d'améliorer fortement les propriétés à froid des paraffines issues du procédé Fisher-Tropsch et ayant des points d'ébullition correspondants à ceux des fractions gazole et kérosène, (encore appelées distillats moyens) et notamment d'améliorer le point de congélation des kérosènes.
- d'augmenter la quantité de distillats moyens disponibles par hydrocraquage des composés paraffiniques les plus lourds, présents dans l'effluent de sortie de l'unité Fischer-Tropsch, et qui ont des points d'ébullition supérieurs à ceux des coupes kérosène et gazole, par exemple la fraction 380°C⁺.
- de traiter des effluents du procédé Fischer-Tropsch ayant des contaminants ou des poisons variés tels que des particules solides, des métaux, des composés organo-métalliques et des composés oxygénés.
- et ce procédé permet de mettre en oeuvre une silice-alumine particulière comme catalyseur d'hydrocraquage/hydroisomérisation permettant d'obtenir des catalyseurs très sélectifs et actifs.

Plus précisément l'invention concerne un procédé de production de distillats moyens à partir d'une charge paraffinique produite par synthèse Fischer-Tropsch mettant en oeuvre une étape d'hydrotraitement et épuration et/ou décontamination par passage sur un lit de garde comprenant au moins un catalyseur imprégné par une phase active hydro-déshydrogénante à base de nickel et de molybdène sur un support alumine, et ayant un volume mercure macroporeux pour un diamètre moyen à 50 nm supérieur à 0,1 cm³/g et un volume mercure total supérieur à 0,60 cm³/g en amont de la ou des étapes d'hydrocraquage/hydroisomérisation. **Description détaillée de l'invention**

### Techniques de caractérisation

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume mercure des supports et des catalyseurs, le volume mesuré par intrusion au porosimètre à mercure selon la norme ASTM D4284-83 à une pression maximale de 4000 bar, utilisant une tension de surface de 484 dyne/cm et un angle de contact pour les supports alumine-silice amorphe de 140°. Une des raisons pour lesquelles il est préférable d'utiliser le support comme base pour définir la distribution poreuse tient dans le fait que l'angle de contact du mercure varie après imprégnation des métaux et ceci en fonction de la nature et de type de métaux. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume mercure en ml/g donnée dans le texte qui suit correspond à la valeur du volume mercure total (volume poreux total mesuré par intrusion au porosimètre à mercure) en ml/g mesurée sur l'échantillon moins la valeur du volume mercure en ml/g mesurée sur le même échantillon pour une pression correspondant à 30 psi (environ 2 bars). On définit également le diamètre moyen mercure comme étant un diamètre tel que tous les pores de taille inférieure à ce diamètre constituent 50% du volume poreux total mercure.

Afin de mieux caractériser la distribution poreuse, on définit enfin les critères de distribution poreuse suivants en mercure: le volume V1 correspond au volume contenu dans les pores dont le diamètre est inférieur au diamètre moyen moins 30 Å**.** Le volume V2 correspond au volume contenu dans les pores de diamètre supérieur ou égal au diamètre moyen moins 30 Å et inférieur au diamètre moyen plus 30 Å. Le volume V3 correspond au volume contenu dans les pores de diamètre supérieur ou égal au diamètre moyen plus 30 Å. Le volume V4 correspond au volume contenu dans les pores dont le diamètre est inférieur au diamètre moyen moins 15 Å. Le volume V5 correspond au volume contenu dans les pores de diamètre supérieur ou égal au diamètre moyen moins 15 Å et inférieur au diamètre moyen plus 15 Å. Le volume V6 correspond au volume contenu dans les pores de diamètre supérieur ou égal au diamètre moyen plus 15 Å.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P₀= 0,99, pression pour laquelle il est admis que l'azote a rempli tous les pores. On définit le diamètre moyen désorption azote comme étant un diamètre tel que tous les pores inférieurs à ce diamètre constituent 50% du volume poreux (Vp) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de Liège, 6ème série, Tome I, fasc.4, pp.169-209 (1971)".

La teneur en sodium a été mesurée par spectrométrie d'absorption atomique.

La diffraction X est une technique pouvant être utilisée pour caractériser les supports et catalyseurs selon l'invention. Dans l'exposé qui suit, l'analyse des rayons X est réalisée sur poudre avec un diffractomètre Philips PW 1830 opérant en réflexion et équipé d'un monochromateur arrière en utilisant la radiation CoKalpha (λK_{α1} = 1.7890 Å, λIK_{α2} = 1.793 Å, rapport d'intensité K_{α1}/K_{α2} = 0,5). Pour le diagramme de diffraction X de l'alumine gamma, on se reportera à la base de données ICDD, fiche 10-0425. En particulier, les 2 pics les plus intenses sont situés à une position correspondant à un d compris entre 1,39 et 1,40 Å et un d compris entre 1,97 Å à 2,00 Å. On appelle d la distance inter-réticulaire qui est déduite de la position angulaire en utilisant la relation dite de Bragg (2 d ₍ₕₖₗ₎ * sin (θ) = n * (λ) Par alumine gamma, on entend dans la suite du texte entre autres par exemple une alumine comprise dans le groupe composé des alumines gamma cubique, gamma pseudo-cubique, gamma tétragonale, gamma mal ou peu cristallisée, gamma grande surface, gamma basse surface, gamma issue de grosse boehmite, gamma issue de boehmite cristallisée, gamma issue de boehmite peu ou mal cristallisée, gamma issue d'un mélange de boehmite cristallisée et d'un gel amorphe, gamma issue d'un gel amorphe, gamma en évolution vers delta . Pour les positions des pics de diffraction des alumines êta, delta et thêta, on peut se référer à l'article de B.C. Lippens, J.J. Steggerda, dans Physical and Chemical aspects of adsorbents and catalysts, E.G. Linsen (Ed.), Academic Press, London, 1970, p.171-211.

Pour les supports et catalyseurs d'hydrocraquage/hydroisomérisation le diagramme de diffraction X met en évidence un pic large caractéristique de la présence de silice amorphe. Par ailleurs, dans l'ensemble du texte qui suit, le composé d'alumine peut contenir une fraction amorphe difficilement détectable par les techniques de DRX. On sous-entendra donc par la suite que les composés d'alumine utilisés ou décrits dans le texte peuvent contenir une fraction amorphe ou mal cristallisée.

Les supports et catalyseurs du procédé selon l'invention ont été analysés par RMN MAS du solide de ²⁷Al sur un spectromètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après :
Entre 100 et 40 ppm, aluminiums de type tétra-coordinés, notés Al_{IV},
Entre 40 et 20 ppm, aluminiums de type penta-coordinés, notés Al_{V},
Entre 20 et -100 ppm, aluminiums de type hexa-coordinés, notés Al_{VI}.
L'atome d'aluminium est un noyau quadripolaire. Dans certaines conditions d'analyse (champs de radiofréquence faible : 30 kHz, angle d'impulsion faible : π/2 et échantillon saturé en eau), la technique de RMN de rotation à l'angle magique (MAS) est une technique quantitative. La décomposition des spectres RMN MAS permet d'accéder directement à la quantité des différentes espèces. Le spectre est calé en déplacement chimique par rapport à une solution 1 M de nitrate d'aluminium. Le signal d'aluminium est à zéro ppm. Nous avons choisi d'intégrer les signaux entre 100 et 20 ppm pour les Al_{IV} et Al_{V}, ce qui correspond à l'aire 1, et entre 20 et -100 ppm pour Al_{VI}, ce qui correspond à l'aire 2. Dans l'exposé qui suit de l'invention, on entend par proportion des Al_{VI} octaédriques le rapport suivant: aire 2/ (aire 1 + aire 2).

L'environnement du silicium des alumines-silice est étudié par la RMN de ²⁹Si. Les tables de déplacements chimiques en fonction du degré de condensation ont été déduites de l'ouvrage de G.Engelhardt et D.Michel : «High resolution solid-state NMR of silicates and zeolites » (Wiley), 1987.

La RMN 29 Si montre les déplacements chimiques des différentes espèces de silicium telles que Q⁴ (-105ppm à - 120 ppm), Q³ (-90ppm à -102 ppm) et Q² (-75ppm à - 93 ppm). Les sites avec un déplacement chimique à -102 ppm peuvent être des sites de type Q³ ou Q⁴, nous les appelons sites Q³-4. Les définitions des sites sont les suivantes :
sites Q⁴ : Si lié à 4Si (ou Al),
sites Q³ : Si lié à 3 Si(ou Al) et 1 OH
sites Q² : Si lié à 2 Si(ou Al) et 2 OH;

Les alumines-silice sont composées de silicium de types Q², Q³, Q³⁻⁴ et Q⁴. De nombreuses espèces seraient de type Q², approximativement de l'ordre de 10 à 80%, de préférence 20 à 60 % et manière préférée de 20 à 40%. La proportion des espèces Q³ et Q³⁻⁴ est également importante, approximativement de l'ordre de 5 à 50 % et de manière préférée de 10 à 40% pour les deux espèces.
L'environnement des siliciums a été étudié par RMN CP MAS ¹H->²⁹Si, (300 MHz, vitesse de rotation : 4000 Hz). Dans ce cas, seul le silicium lié à des liaisons OH doit répondre. La table des déplacements chimiques utilisés est celle de Kodakari et al. , Langmuir, 14, 4623-4629, 1998. Les attributions sont les suivantes : -108 ppm (Q4), -99 ppm (Q³/Q4(1 Al)), -91 ppm (Q3/Q3(1Al)), -84 ppm (Q2/Q3(2Al), -78 ppm (Q2/Q3(3Al) et -73 ppm Q1/Q2 (3 Al).
Les alumines-silice de l'invention se présentent sous la forme de superposition de plusieurs massifs. Le pic principal de ces massifs est généralement situé à -110 ppm.

Une méthode de caractérisation des supports et catalyseurs du procédé selon l'invention pouvant être utilisée est la microscopie électronique par transmission (MET). Pour cela on utilise un microscope électronique (du type Jeol 2010 ou Philips Tecnai20F éventuellement avec balayage) équipé d'un spectromètre à dispersion d'énergie (EDS) pour l'analyse des rayons X (par exemple un Tracor ou un Edax). Le détecteur EDS doit permettre la détection des éléments légers. L'association de ces deux outils, MET et EDS, permet de combiner l'imagerie et l'analyse chimique locale avec une bonne résolution spatiale.
Pour ce type d'analyse, les échantillons sont finement broyés à sec dans un mortier ; la poudre est ensuite incluse dans de la résine pour réaliser des coupes ultrafines d'épaisseur 70 nm environ. Ces coupes sont recueillies sur des grilles de Cu recouvertes d'un film de carbone amorphe à trous servant de support. Elles sont ensuite introduites dans le microscope pour observation et analyse sous vide secondaire. En imagerie, on distingue alors aisément les zones d'échantillon des zones de résine. On procède ensuite à un certain nombre d'analyses, 10 au minimum, de préférence comprises entre 15 et 30, sur différentes zones de l'échantillon industriel. La taille du faisceau électronique pour l'analyse des zones (déterminant approximativement la taille des zones analysées) est de 50 nm de diamètre au maximum, de préférence de 20 nm, de manière encore plus préférée 10, 5, 2 ou 1nm de diamètre. En mode balayé, la zone analysée sera fonction de la taille de la zone balayée et non plus de la taille du faisceau généralement réduit.

Le traitement semi quantitatif des spectres X recueillis à l'aide du spectromètre EDS permet d'obtenir la concentration relative de Al et de Si (en % atomique) et le rapport Si/Al pour chacune des zones analysées. On peut alors calculer la moyenne Si/Alₘ et l'écart type σ de cet ensemble de mesures. Dans les exemples non limitatifs de l'exposé qui suit de l'invention, la sonde de 50 nm est la sonde utilisée pour caractériser les supports et catalyseurs selon l'invention sauf mention contraire.

La densité de remplissage tassée (DRT) est mesurée de la manière décrite dans l'ouvrage " Applied Heterogenous Catalysis " de J.F. Le Page, J. Cosyns, P. Courty, E. Freund, J-P. Franck, Y. Jacquin, B. Juguin, C. Marcilly, G. Martino, J. Miquel, R. Montarnal, A. Sugier, H. Van Landeghem, Technip, Paris, 1987. Un cylindre gradué de dimensions acceptables est rempli de catalyseur par additions successives; et entre chaque addition, le catalyseur est tassé en secouant le cylindre jusqu'à atteindre un volume constant. Cette mesure est généralement réalisée sur 1000 cm3 de catalyseur tassé dans un cylindre dont le ratio hauteur sur diamètre est proche de 5:1. Cette mesure peut être, de manière préférée, réalisée sur des appareils automatisés tels que Autotap® commercialisé par Quantachrome®.

L'acidité de la matrice est mesurée par spectrométrie Infra-Rouge (IR). Les spectres IR sont enregistrés sur un interféromètre Nicolet de type Nexus-670 sous une résolution de 4 cm-1 avec une apodisation de type Happ-Gensel. L'échantillon (20 mg) est pressé sous la forme d'une pastille auto-supportée, puis est placé dans une cellule d'analyse in-situ (25°C à 550°C, four déporté du faisceau IR, vide secondaire de 10-6 mbar). Le diamètre de la pastille est de 16 mm.
L'échantillon est prétraité de la façon suivante afin d'éliminer l'eau physisorbée et de déshydroxyler partiellement la surface du catalyseur afin d'obtenir une image représentative de l'acidité du catalyseur en fonctionnement :
- montée en température de 25°C à 300°C en 3 heures
- palier de 10 heures à 300 °C
- descente de température de 300°C à 25°C en 3 heures

La sonde basique (pyridine) est ensuite adsorbée à pression saturante à 25°C puis thermo-désorbée selon les paliers suivants :
- 25°C pendant 2 heures sous vide secondaire
- 100°C 1 heure sous vide secondaire
- 200°C 1 heure sous vide secondaire
- 300°C 1 heure sous vide secondaire

Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (20 mg exactement). Le nombre de sites de Lewis est proportionnel à la surface du pic dont le maximum se situe vers 1450 cm-1, tout épaulement étant inclus. Le nombre de sites de Bronsted est proportionnel à la surface du pic dont le maximum se situe vers 1545 cm-1. Le rapport du nombre de sites de Bronsted /nombre de sites de Lewis B/L est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

Lorsqu'un élément dopant, P et éventuellement B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

La composition globale du catalyseur peut être déterminée par fluorescence X sur le catalyseur à l'état pulvérulent ou par absorption atomique après attaque acide du catalyseur.

La mesure de la composition locale à l'échelle du micron, par opposition à la composition globale du catalyseur, peut s'effectuer par microsonde électronique Cette mesure peut s'effectuer en déterminant les teneurs en métal sur des zones de quelques microns cubes le long du diamètre d'une particule de catalyseurs que l'on appelle unités de mesures. Cette mesure permet d'évaluer la répartition macroscopique des éléments à l'intérieur des particules. Elle peut être complétée éventuellement à l'échelle du nanomètre par STEM (Scanning Transmission Electron Microscopy (Microscopie électronique de transmission à balayage)).

Les analyses sont conduites sur une microsonde électronique CAMECA SX100 (équipée de 5 spectromètres à dispersion de longueur d'onde)(appareillage préféré) ou éventuellement sur JEOL 8800R(4 spectromètres) Les paramètres d'acquisition sont les suivants : tension d'accélération 20 kV, courant 80 ou 200 nA et temps de comptage 10 s ou 20 s selon le niveau de concentration. Les particules sont enrobées dans la résine puis polies jusqu'à leur diamètre.

On notera que l'appellation diamètre ne se réfère pas uniquement à une forme en bille ou en extrudé, mais plus généralement à toute forme de particules ; est dénommée diamètre en fait la longueur représentative de la particule sur laquelle est effectuée la mesure.

Les mesures sont effectuées sur un échantillon représentatif du lit ou du lot de catalyseur qui sera utilisé sur un lit catalytique. On a considéré que les analyses devraient être faites sur au moins 5 particules avec au moins 30 mesures par particule, uniformément réparties le long du diamètre.

On appelle CMo, CNi, CW et CP les concentrations locales (exprimées en %) respectivement en Molybdène, Nickel, Tungstène et phosphore

On pourrait tout aussi bien exprimer les concentrations en % atomique, les fluctuations relatives étant les mêmes.

Il est intéressant de préparer des catalyseurs présentant des concentrations homogènes C_{Mo}, C_{Ni}, C_{W} et C_{P} le long de l'extrudé. Il est également intéressant de préparer des catalyseurs présentant des concentrations C_{Mo}, C_{Ni}, C_{W} et C_{P} au coeur et en périphérie différente. Ces catalyseurs présentent des profils de répartition dits en « cuvette » ou en « dôme ». Un autre type de répartition est celle en croûte où les éléments de la phase active sont répartis en surface.

### Description détaillée de l'invention

### Procédés de préparation des catalyseurs

Les catalyseurs utilisés dans les différentes étapes du procédé selon l'invention peuvent être préparés selon toutes les méthodes bien connues de l'homme du métier.

Un procédé préféré de préparation des catalyseurs utilisables dans le procédé selon la présente invention pour les catalyseurs d'hydrocraquage/hydroisomérisation comprend les étapes suivantes :
Selon un mode de préparation préféré, le précurseur est obtenu par mise en forme directe de l'alumine-silice seule ou par mise en forme de l'alumine-silice avec au moins un liant, puis séchage et calcination. Les éléments des groupes VIB et/ou VIII, et éventuellement ceux choisis parmi le phosphore, le bore, le silicium et éventuellement les éléments des groupes VB, et VIIB, sont alors éventuellement introduits par toute méthode connue de l'homme du métier, avant ou après la mise en forme et avant ou après la calcination du précurseur ou du catalyseur.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme l'alumine-silice sans liant après un malaxage de cette dernière, puis passage de la pâte ainsi obtenue au travers d'une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage. Elle peut également être introduite par une ou plusieurs opérations d'échange ionique sur le support calciné constitué d'au moins une alumine-silice, éventuellement mise en forme avec un liant, à l'aide de solutions contenant les sels précurseurs des métaux choisis lorsque ceux-ci appartiennent au groupe VIII. Elle peut aussi être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite, de façon très préférée par une ou plusieurs opérations d'imprégnation du support calciné constitué d'au moins une alumine-silice selon l'invention et éventuellement d'au moins un liant, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur d'hydrocraquage/hydroisomérisation peut donc renfermer au moins un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel, le platine , le palladium et le ruthénium. Le catalyseur selon l'invention peut également renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, platine-palladium, les associations préférées sont : nickel-molybdène, cobalt-molybdène, cobalt-tungstène et encore plus avantageusement platine-palladium et nickel-tungstène. Il est également possible d'utiliser des associations de trois métaux par exemple nickel-cobalt-molybdène, nickel-molybdène-tungstène, nickel-cobalt-tungstène. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférées étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

L'un au moins des éléments suivants : phosphore et éventuellement bore et/ou silicium et éventuellement l'(les) élément(s) choisi(s) dans le(s) groupe(s) VIIB et VB, sont introduits dans le catalyseur à tout niveau de la préparation et selon toute technique connue de l'homme du métier.

Une méthode préférée selon l'invention consiste à déposer le ou les éléments dopants choisis sur le précurseur calciné ou non, de préférence calciné. Pour le dépôt de bore par exemple, on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur alumine-silice, il est possible d'imprégner ce précurseur par de la solution aqueuse de biborate d'ammonium et de silicone Rhodorsil E1P de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

L'élément dopant choisi dans le groupe formé par le phosphore, le silicium et le bore ainsi que les éléments des groupes VIIB, VB, peuvent être introduits par une ou plusieurs opérations d'imprégnation avec excès de solution sur le précurseur calciné.

Lorsqu'au moins un élément dopant, P et éventuellement B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

Il est intéressant de préparer des catalyseurs présentant des concentrations homogènes C_{Mo}, C_{Ni}, C_{W} et C_{P} le long de l'extrudé. Il est également intéressant de préparer des catalyseurs présentant des concentrations C_{Mo}, C_{NI}, C_{W} et C_{P} au coeur et en périphérie différente. Ces catalyseurs présentent des profils de répartition dits en « cuvette » ou en « dôme ». Un autre type de répartition est celle en croûte où les éléments de la phase active sont répartis en surface.

De façon générale, le rapport coeur/bord des concentrations C_{Mo}, C_{Ni}, C_{W} et C_{P} est compris entre 0.1 et 3. Dans une variante de l'invention, il est compris entre 0.8 et 1.2. Dans une autre variante de l'invention, le rapport coeur/bord des concentrations C_{P} est compris entre 0.3 et 0.8.

La source de phosphore préférée est l'acide orthophosphorique H₃PO₄, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène -phosphore ou molybdène-tungstène-phosphore. Ces composés mixtes peuvent être des hétéropolyanions. Ces composés peuvent être des hétéropolyanions d'Anderson, par exemple. La teneur massique en phosphore calculée sous la forme P₂O₅ est comprise entre 0,01 et 6%, de préférence entre 0,01 et 4%, de manière très préférée entre 0.01 et 2.5%.

La source de bore peut être l'acide borique, de préférence l'acide orthoborique H₃BO₃, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux du groupe VIB et du groupe VIII du catalyseur de la présente invention peuvent être présents en totalité ou partiellement sous forme métallique et/ou oxyde et/ou sulfure.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels.
Les sources d'éléments du groupe VIII qui peuvent être utilisées sont bien connues de l'homme du métier. Par exemple, pour les métaux non nobles on utilisera les nitrates, les sulfates, les hydroxydes, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

De préférence, on n'ajoute pas d'halogènes autres que celui introduit à l'imprégnation, cet halogène étant de préférence le chlore.

### Préparation du support

Le support peut être constitué d'alumine-silice pure ou résulte du mélange avec ladite alumine-silice d'un liant tel que la silice (SiO₂), l'alumine (Al₂O₃), les argiles, l'oxyde de titane (TiO₂), l'oxyde de bore (B₂O₃) et la zircone (ZrO₂) et tout mélange des liants précédemment cités. Les liants préférés sont la silice et l'alumine et de manière encore plus préférée l'alumine sous toutes ces formes connues de l'homme du métier, par exemple l'alumine gamma. La teneur pondérale en liant dans le support du catalyseur est comprise entre 0 et 40%, plus particulièrement entre 1 et 40% et de manière encore plus préférée entre 5% et 20%. Cependant, les catalyseurs selon l'invention dont le support est constitué uniquement d'alumine-silice sans aucun liant sont préférés.

Le support peut être préparé par mise en forme de l'alumine-silice en présence ou en absence de liant par toute technique connue de l'homme du métier.

Dans l'ensemble des méthodes précitées, il peut être éventuellement souhaitable d'ajouter, lors d'une étape quelconque de la préparation, une proportion mineure d'au moins un élément promoteur choisi dans le groupe formé par la zircone et le titane.

### Mise en forme des supports et catalyseurs

Le support peut être obtenu par mise en forme de l'alumine-silice par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

La mise en forme peut également être réalisée en présence des différents constituants du catalyseur et extrusion de la pâte minérale obtenue, par pastillage, mise en forme sous forme de billes au drageoir tournant ou au tambour, coagulation en goutte, oil-drop, oil-up, ou tout autre procédé connu d'agglomération d'une poudre contenant de l'alumine et éventuellement d'autres ingrédients choisis parmi ceux mentionnés ci-dessus.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Par ailleurs, ces supports peuvent avoir été traités ainsi qu'il est bien connu de l'homme de l'art par des additifs pour faciliter la mise en forme et/ou améliorer les propriétés mécaniques finales des supports alumino-silicates. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents flocculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristique des supports est opéré partiellement lors de cette étape de mise en forme des particules de supports.

La mise en forme peut être réalisée en utilisant les techniques de mise en forme des catalyseurs, connues de l'homme de l'art, telles que par exemple: extrusion, dragéification, séchage par atomisation ou encore pastillage.

On peut ajouter ou retirer de l'eau pour ajuster la viscosité de la pâte à extruder. Cette étape peut être réalisée à tout stade de l'étape de malaxage. Dans le cas de supports alumino-silicates, il peut être avantageux de diminuer la quantité d'eau de la pâte afin d'accroître la puissance mécanique fournie à la pâte. Cette action se traduit généralement par une diminution du volume total pour une teneur en acide optimale.

Pour ajuster la teneur en matière solide de la pâte à extruder afin de la rendre extrudable, on peut également ajouter un composé majoritairement solide et de préférence un oxyde ou un hydrate. On utilisera de manière préférée un hydrate et de manière encore plus préférée un hydrate d'aluminium. La perte au feu de cet hydrate sera supérieure à 15%.

La teneur en acide ajouté au malaxage avant la mise en forme est inférieure à 30%, de préférence comprise entre 0,5 et 20% poids de la masse anhydre en silice et alumine engagée dans la synthèse.

L'extrusion peut être réalisée par n'importe quel outil conventionnel, disponible commercialement. La pâte issue du malaxage est extrudée à travers une filière, par exemple à l'aide d'un piston ou d'une mono-vis ou double vis d'extrusion. Cette étape d'extrusion peut être réalisée par toute méthode connue de l'homme de métier.

Les extrudés de support selon l'invention ont généralement une résistance à l'écrasement d'au moins 70 N/cm et de manière préférée supérieure ou égale à 100 N/cm.

### Calcination du support

Le séchage est effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1100°C. Au moins une calcination peut être effectuée après l'une quelconque des étapes de la préparation. Ce traitement par exemple peut être effectué en lit traversé, en lit léché ou en atmosphère statique. Par exemple, le four utilisé peut être un four rotatif tournant ou être un four vertical à couches traversées radiales. Les conditions de calcination: température et durée dépendent principalement de la température maximale d'utilisation du catalyseur. Les conditions préférées de calcination se situant entre plus d'une heure à 200°C à moins d'une heure à 1100°C. La calcination peut être opérée en présence de vapeur d'eau. La calcination finale peut être éventuellement effectuée en présence d'une vapeur acide ou basique. Par exemple, la calcination peut être réalisée sous pression partielle d'ammoniaque.

### Traitements post-synthèse

Des traitements post-synthèse peuvent être effectués, de manière à améliorer les propriétés du support, notamment son homogénéité telle que définie précédemment.

Selon un mode de réalisation préféré, le traitement post-synthèse est un traitement hydrothermal. Le traitement hydrothermal est effectué par toute technique connue de l'homme du métier. Par traitement hydrothermal, on entend mise en contact à n'importe quel étape de l'élaboration du support mixte avec de l'eau en phase vapeur ou en phase liquide.
Par traitement hydrothermal, on peut entendre notamment mûrissement, steaming (traitement à la vapeur), autoclavage, calcination sous air humide, réhydratation. Sans que cela réduise la portée de l'invention, un tel traitement a pour effet de rendre mobile le composant silice.

Selon l'invention, le mûrissement peut avoir lieu avant ou après la mise en forme. Selon un mode préféré de l'invention, le traitement hydrothermal se fait par steaming (traitement à la vapeur) dans un four en présence de vapeur d'eau. La température pendant le steaming (traitement à la vapeur) peut être comprise entre 600 et 1100 °C et de préférence supérieure à 700°C pendant une période de temps comprise entre 30 minutes et 3 heures. La teneur en vapeur d'eau est supérieure à 20 g d'eau par kg d'air sec et de préférence supérieure à 40 g d'eau par kg d'air sec et de manière préférée supérieure à 100 g d'eau par kg d'air sec. Un tel traitement peut, le cas échéant, remplacer totalement ou en partie le traitement de calcination.

Le support peut ainsi être avantageusement soumis à un traitement hydrothermal en atmosphère confinée. On entend par traitement hydrothermal en atmosphère confinée un traitement par passage à l'autoclave en présence d'eau sous une température supérieure à la température ambiante.

Au cours de ce traitement hydrothermal, on peut traiter de différentes manières l'alumine-silice mise en forme. Ainsi, on peut imprégner l'alumine silice d'acide, préalablement à son passage à l'autoclave, l'autoclavage de l'alumine-silice étant fait soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion de l'alumine-silice dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

L'autoclave est de préférence un autoclave à panier rotatif tel que celui défini dans la demande brevet EP-A- 0 387 109.

La température pendant l'autoclavage peut être comprise entre 100 et 250°C pendant une période de temps comprise entre 30 minutes et 3 heures.

### Caractéristiques du catalyseur d'hydrocraquage/hydroisomérisation

La présente invention met en oeuvre un ou plusieurs catalyseurs d'hydrocraquage/hydroisomérisation. Un catalyseur d'hydrocraquage/hydroisomérisation préféré comporte :
- au moins un élément hydro-déshydrogénant choisi dans le groupe formé par les éléments du groupe VIB et du groupe VIII de la classification périodique,
- de 0 à 6% de phosphore comme élément dopant, (en combinaison éventuellement avec bore et/ou silicium),
- et un support non zéolitique à base d'alumine-silice
ladite alumine-silice présentant les caractéristiques suivantes :
- un pourcentage de silice compris entre 5 et 95 % poids, de préférence entre 10 et 80%, de manière plus préférée entre 20 et 60 % et de manière très préférée entre 30 et 50%,
- un contenu en sodium inférieur à 0.03% poids,
- un volume poreux total mesuré par porosimétrie au mercure compris entre 0.45 et 1.2 ml/g,
- une porosité telle que :
   i) le volume des mésopores avec un diamètre compris entre 40 et 150 A et un diamètre moyen poreux compris entre 80 et 140 A (de préférence entre 80 et 120 A) représente 30-80% du volume poreux total mesuré par porosimétrie au mercure
   ii) le volume des macropores avec un diamètre supérieur à 500 A représente 20-80% du volume poreux total mesuré par porosimétrie au mercure
   une surface spécifique BET comprise entre 100 et 550 m²/g, de préférence comprise entre 150 et 500 m²/g, de manière préférée inférieure à 350 m²/g et de manière encore plus préférée inférieure à 250 m²/g,
   un diagramme de diffraction X qui contient au moins les raies principales caractéristiques d'au moins une des alumines de transition comprise dans le groupe composé par les alumines alpha, rhô, khi, êta, gamma, kappa, thêta et delta.

### Caractéristiques des catalyseurs utilisés dans les lits de garde multifonctionnels du procédé selon l'invention

Les lits de garde multifonctionnels selon l'invention contiennent au moins un catalyseur. Ils peuvent associer un catalyseur d'hydrotraitement conventionnel avec un catalyseur tel que décrit ci-dessous.

### Forme des catalyseurs

Les catalyseurs de lits de garde utilisés selon l'invention peuvent avoir la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

### Phase active

Ces catalyseurs ou lits de garde utilisés selon l'invention sont imprégnés par une phase hydro-déshydrogénante: la phase NiMo est utilisée.

### Caractéristiques poreuses et modes de réalisation, des lits de garde selon l'invention

Ces catalyseurs ou lits de garde utilisés selon l'invention peuvent présenter de la macroporosité.

Selon l'invention, le catalyseur comprend un volume mercure macroporeux pour un diamètre moyen à 50 nm qui est supérieur à 0.1 cm³/g, de préférence compris entre 0.125 et 0.175 cm³/g et un volume total supérieur à 0,60 cm³/g, de préférence compris entre 0.625 et 0.8 cm³/g, par exemple l'ACT961. Ledit catalyseur est imprégné par une phase active, à base de Nickel et de Molybdène. Dans ce mode de réalisation préféré, la teneur en Ni en poids d'oxyde est généralement comprise entre 1 et 10% et la teneur en Mo en poids d'oxyde est comprise entre 5 et 15 %.

Dans un premier mode de réalisation, le lit de garde comprend également au moins un catalyseur ayant un volume mercure pour un diamètre de pores supérieur à 1 micron supérieur à 0.2 cm³/g et de préférence supérieur à 0.5 cm³/g et un volume mercure pour un diamètre de pores supérieur à 10 microns supérieur à 0.25 cm³/g et de préférence inférieur à 0.4 cm³/g, ledit catalyseur étant avantageusement placé en amont du catalyseur de lit de garde selon l'invention.

Dans un deuxième mode de réalisation, le lit de garde comprend également au moins un catalyseur ayant un volume mercure pour un diamètre de pores supérieur à 50 nm supérieur à 0,25 cm³/g, le volume mercure pour un diamètre de pores supérieur à 100 nm supérieur à 0,15 cm³/g et un volume poreux total supérieur à 0,80 cm³/g.

Le catalyseur de lit de garde selon l'invention et le catalyseur selon le premier mode de réalisation peuvent de manière avantageuse être associés dans un lit mixte ou un lit combiné. Généralement le catalyseur imprégné de phase active selon l'invention constitue la majorité du lit de garde et le catalyseur selon le premier mode de réalisation préféré est ajouté en complément de 0 à 50% en volume par rapport au premier catalyseur, de manière préférée de 0 à 30 %, de manière encore plus préférée de 1 à 20%.

La combinaison du catalyseur de lit de garde selon l'invention et du catalyseur selon le premier mode de réalisation ne restreignent pas la portée de l'invention. En effet, des catalyseurs utilisables dans les lits de garde selon l'invention peuvent être utilisés seuls ou en mélanges et choisis de manière non exhaustive parmi les catalyseurs commercialisés par Norton-Saint-Gobain, par exemple les lits de garde MacroTrap® ou les catalyseurs commercialisés par Axens dans la famille ACT: ACT077, ACT935, ACT961 ou HMC841, HMC845, HMC941, HMC945 ou ACT645.
Les lits de garde préférés selon l'invention sont les HMC et l'ACT961.

Il peut être particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Avantageusement, une association du catalyseur de lit de garde utilisé selon l'invention avec les catalyseurs le premier et le deuxième mode de réalisation est également possible dans un lit mixte ou un lit combiné. Dans ce cas, les catalyseurs sont placés par taux de vide décroissant dans le sens de l'écoulement. Plus précisément, dans ce cas, le catalyseur selon le deuxième mode de réalisation est placé entre le catalyseur selon le deuxième mode de réalisation et le catalyseur de lit de garde selon l'invention.
Les étapes d'hydrotraitement sur au moins un lit de garde multifonctionnel et la ou les étapes d'hydrocraquage/hydroisomérisation peuvent avantageusement être réalisées dans des réacteurs différents ou au sein du même réacteur.
Il peut être également particulièrement avantageux de réaliser l'étape d'hydrotraitement sur au moins un lit de garde multifonctionnel en amont de la ou des étapes d'hydrocraquage/hydroisomérisation au sein du même réacteur.

### Description du procédé selon l'invention

Plus précisément, l'invention concerne un procédé de production de distillats moyens à partir d'une charge paraffinique produite par synthèse Fischer-Tropsch, mettant en oeuvre une étape d'hydrotraitement et épuration et/ou décontamination par passage sur au moins un lit de garde multifonctionnel qui continent au moins un catalyseur tel que décrit selon la revendication 1 en amont de la ou des étapes d'hydrocraquage/hydroisomérisation et comprenant différentes étapes successives.

### Modes de réalisation du procédé selon l'invention

Un mode de réalisation de l'invention comprend les étapes suivantes :
a) séparation d'une seule fraction dite lourde à point d'ébullition initial compris entre 120-200°C,
b) hydrotraitement d'une partie au moins de ladite fraction lourde et épuration et/ou décontamination d'au moins une partie au moins de ladite fraction fraction lourde sur un lit de garde selon l'invention,
c) fractionnement en au moins 3 fractions :
   - au moins une fraction intermédiaire ayant un point d'ébullition initial T1 compris entre 120 et 200°C, et un point d'ébullition final T2 supérieur à 300°C et inférieur à 410°C,
   - au moins une fraction légère bouillant au-dessous de la fraction intermédiaire,
   - au moins une fraction lourde bouillant au-dessus de la fraction intermédiaire.
d) passage d'une partie au moins de ladite fraction intermédiaire sur un catalyseur amorphe d'hydroisomérisation / hydrocraquage,
e) passage sur un catalyseur amorphe d'hydroisomérisation / hydrocraquage d'une partie au moins de ladite fraction lourde,
f) distillation des fractions hydrocraquées / hydroisomérisées pour obtenir des distillats moyens, et recyclage de la fraction résiduelle bouillant au-dessus desdits distillats moyens dans l'étape (e) sur le catalyseur amorphe traitant la fraction lourde.

La description de ce mode de réalisation sera faite en se référant à la figure 1 sans que la figure 1 limite l'interprétation.

### Etape (a)

L'effluent issu de l'unité de synthèse Fischer-Tropsch arrivant par la conduite 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention. La fraction lourde peut contenir des particules solides tels que des solides minéraux. Parmi les solides minéraux, ceux-ci peuvent se provenir notamment des catalyseurs de synthèse Fischer-Tropsch. Ils peuvent notamment se présenter sous formes de fines de catalyseurs. Par le terme fines, on entend des fines résultant d'une attrition physique ou chimique du catalyseur. Elles peuvent être microniques ou sub-microniques. Ces particules minérales contiennent alors les composants actifs de ces catalyseurs sans que la liste suivante soit limitative : alumine, silice, titane, zircone, oxyde de cobalt, oxyde de fer, tungstène, oxyde de rhuthénium... Ces solides minéraux peuvent se présenter sous la forme d'oxyde mixte calciné : par exemple, alumine-cobalt, alumine-fer, alumine-silice, alumine-zircone, alumine-titane, alumine-silice-cobalt, alumine-zircone-cobalt,....

Elle peut également contenir des métaux au sein de structures hydrocarbonés, pouvant éventuellement contenir de l'oxygène. Elle peut contenir des composés organo-métalliques plus ou moins solubles. Plus particulièrement, ces composés peuvent être à base de silicium. Il peut s'agir par exemple des agents anti-moussants utilisés dans le procédé de synthèse. Par exemple, les solutions d'un composé du silicium de type silicone ou émulsion d'huile silicone sont plus particulièrement contenus dans la fraction lourde.

Par ailleurs, les fines de catalyseurs décrites ci-dessus peuvent avoir une teneur en silice supérieure à la formulation du catalyseur, résultant de l'interaction intime entre les fines de catalyseurs et des agents anti-moussants décrits ci-dessus.

### Etape (b)

Cette fraction est admise en présence d'hydrogène (conduite 6) dans une zone (7) contenant au moins un catalyseur d'hydrotraitement (lit de garde multifonctionnel) qui a pour objectif de réduire la teneur en composés oléfiniques et insaturés ainsi que d'hydrotraiter les composés oxygénés (alcools) présents dans la fraction lourde décrite ci-dessus et de réduire la teneur en particules minérales solides et éventuellement de réduire la teneur en composés métalliques néfastes pour le catalyseur d'hydroisomérisation-hydrocraquage.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.
Avantageusement, au moins un élément choisi parmi P, B, Si est déposé sur le support.
Ces catalyseurs peuvent être préparés par toutes les méthodes connues de l'homme de l'art ou bien peuvent être acquis auprès de sociétés spécialisées dans la fabrication et la vente de catalyseurs.

Les catalyseurs de lits de garde utilisés selon l'invention peuvent avoir la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

Les catalyseurs de lit de garde selon la revendication 1 sont imprégnés par une phase hydro-déshydrogénante: la phase NiMo est utilisée.

Ces catalyseurs ou lits de garde utilisés selon l'invention présentent de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Ces catalyseurs ou lits de garde utilisés selon l'invention peuvent présenter de la macroporosité. Selon l'invention, le catalyseur comprend un volume macroporeux pour un diamètre moyen à 50 nm supérieur à 0.1 cm³/g et un volume total supérieur à 0,60 cm³/g. Dans un autre mode de réalisation, le lit de garde comprend également un catalyseur ayant un volume mercure pour un diamètre de pores supérieur à 1 microns est supérieur à 0.2 cm³/g et de préférence supérieur à 0.5 cm³/g, et un volume mercure pour un diamètre de pores supérieur à 10 microns est supérieur à 0.25 cm³/g, ledit catalyseur étant avantageusement placé en amont du catalyseur de lit de garde selon l'invention.
Ces deux catalyseurs peuvent de manière avantageuse être associés dans un lit mixte ou un lit combiné.

Dans un deuxième mode de réalisation, le lit de garde comprend également au moins un catalyseur ayant un le volume mercure pour un diamètre de pores supérieur à 50 nm est supérieur à 0,25 cm³/g, le volume mercure pour un diamètre de pores supérieur à 100 nm est supérieur à 0,15 cm³/g et le volume poreux total est supérieur à 0.80 cm³/g.

Les lits de garde préférés selon l'invention sont les HMC et l'ACT961.

Dans le réacteur d'hydrotraitement (7), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350°C, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 NI/l/h, de préférence entre 100 et 2000NI/l/h et de façon encore plus préférée entre 250 et 1500 NI/l/h. Le débit de charge est tel que la vitesse volumique horaire est comprises entre 0,1 et 10h⁻¹, de préférence entre 0,2 et 5h⁻¹ et de manière encore plus préférée entre 0,2 et 3h⁻¹. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

A l'issue de l'étape d'hydrotraitement et éventuellement épuration et/ou décontamination de la fraction lourde, la teneur en particules solides est inférieure à 20 ppm, de manière préférée inférieure à 10 ppm et de manière encore plus préférée inférieure à 5 ppm . A l'issue de l'étape d'hydrotraitement et éventuellement épuration et/ou décontamination de la fraction lourde, la teneur en silicium soluble est inférieure à 5 ppm, de manière préférée inférieure à 2 ppm et de manière encore plus préférée inférieure à 1 ppm .

### Etape (c)

L'effluent issu du réacteur d'hydrotraitement est amené par une conduite (8) dans une zone de fractionnement (9) où il est fractionné en au moins trois fractions :
- au moins une fraction légère (sortant par la conduite 10) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C.
- au moins une fraction intermédiaire (conduite 11) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 12) comportant les composés ayant des points d'ébullition supérieurs au point de coupe T2 précédemment défini.

Les fractions intermédiaires et lourdes précédemment décrites sont traitées selon le procédé de l'invention.

### Etape (d)

Une partie au moins de ladite fraction intermédiaire est alors introduite (conduite 11), ainsi qu'éventuellement un flux d'hydrogène, (conduite 13) dans la zone (14) contenant un catalyseur d'hydroisomérisation / d'hydrocraquage.
Les conditions opératoires dans lesquelles est effectuée cette étape (d) sont :
La pression est maintenue entre 2 et 150 bars et de préférence entre 5 et 100 bars et avantageusement de 10 à 90 bars, la vitesse spatiale est comprise entre 0,1 h⁻¹ et 10 h⁻¹ et de préférence entre 0,2 et 7h⁻¹ est avantageusement entre 0,5 et 5,0h⁻¹. Le taux d'hydrogène est compris entre 100 et 2000 Normaux litres d'hydrogène par litre de charge et par heure et préférentiellement entre 150 et 1500 litres d'hydrogène par litre de charge.
La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.
L'étape (d) d'hydroisomérisation et d'hydrocraquage est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.
Ainsi dans cette étape (d), on cherche à favoriser l'hydroisomérisation plutôt que l'hydrocraquage.

### Etape (e)

Une partie au moins de ladite fraction lourde est introduite via la ligne (12) dans une zone (15) où elle est mise, en présence d'hydrogène (25), au contact d'un catalyseur d'hydroisomérisation/hydrocraquage selon la présente invention afin de produire une coupe distillat moyen (kérosène + gazole) présentant de bonnes propriétés à froid.
Le catalyseur utilisé dans la zone (15) de l'étape (e) pour réaliser les réactions d'hydrocraquage et d'hydroisomérisation de la fraction lourde, définie selon l'invention, est du même type que celui présent dans le réacteur (14). Cependant, il est à noter que les catalyseurs mis en oeuvre dans les réacteurs (14) et (15) peuvent être identiques ou différents.

Durant cette étape (e) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats. La conversion en produits ayant des points d'ébullition supérieurs ou égal à 370°C en produits à points d'ébullition inférieurs à 370°C est supérieure à 80% poids, souvent d'au moins 85% et de préférence supérieure ou égal à 88%. Par contre, les conversions des produits à point d'ébullition supérieurs ou égaux à 260°C en produits à points d'ébullition inférieurs à 260°C est d'au plus 90% poids, généralement d'au plus 70% ou 80%, et de préférence d'au plus 60% poids.

### Etape (f)

Les effluents en sortie des réacteurs (14) et (15) sont envoyés par les conduites (16) et (17) dans un train de distillation, qui intègre une distillation atmosphérique et éventuellement une distillation sous vide, et qui a pour but de séparer d'une part les produits légers inévitablement formés lors des étapes (d) et (e) par exemple les gaz (C₁-C₄) (conduite 18) et une coupe essence (conduite 19), et de distiller au moins une coupe gazole (conduite 21) et kérosène (conduite 20). Les fractions gazole et kérosène peuvent être recyclées (conduite 23) en partie, conjointement ou de façon séparée, en tête du réacteur (14) d'hydroisomérisation /hydrocraquage étape (d).

Il est également distillé une fraction (conduite 22) bouillant au-dessus du gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction est avantageusement recyclée en tête du réacteur (15) via la conduite (26) d'hydroisomérisation /hydrocraquage de la fraction lourde (étape e).

Il peut être également avantageux de recycler une partie du kérosène et/ou du gazole dans l'étape (d), l'étape (e) ou les deux. De façon préférée, l'une au moins des fractions kérosène et/ou gazole est recyclée en partie dans l'étape (d) (zone 14). On a pu constater qu'il est avantageux de recycler une partie du kérosène pour améliorer ses propriétés à froid.
Avantageusement et dans le même temps, la fraction non hydrocraquée est recyclée en partie dans l'étape (e) (zone 15).

Il va sans dire que les coupes gazole et kérosène sont de préférence récupérées séparément, mais les points de coupe sont ajustés par l'exploitant en fonction de ses besoins.

Sur la figure 1, on a représenté une colonne (24) de distillation, mais deux colonnes peuvent être utilisées pour traiter séparément les coupes issues de zones (14) et (15).

Sur la figure 1, on a représenté seulement le recyclage du kérosène sur le catalyseur du réacteur (14). Il va sans dire qu'on peut aussi bien recycler une partie du gazole (séparément ou avec le kérosène) et de préférence sur le même catalyseur que le kérosène.
Un autre mode de réalisation de l'invention comprend les étapes suivantes :
a) séparation d'au moins une fraction légère de la charge de façon à obtenir une seule fraction dite lourde à point d'ébullition initial compris entre 120-200°C,
b) hydrotraitement de ladite fraction lourde, et épuration et/ou décontamination de ladite charge lourde sur un lit de garde multifonctionnel,
c) éventuellement suivi d'une étape d'enlèvement d'au moins une partie de l'eau,
d) passage d'une partie au moins de ladite fraction éventuellement hydrotraitée, la conversion sur le catalyseur d'hydrosiomérisation/hydrocraquage des produits à points d'ébullition supérieurs ou égaux à 370°C en produits à points d'ébullition inférieures à 370°C est supérieure à 80% pds,
e) distillation de la fraction hydrocraquée/hydroisomérisée pour obtenir des distillats moyens, et recyclage dans l'étape d) de la fraction résiduelle bouillant au-dessus desdits distillats moyens.

La description de ce mode de réalisation sera faite en se référant à la figure 2 sans que la figure 2 limite l'interprétation.

### Etape (a)

L'effluent issu de l'unité de synthèse Fischer-Tropsch arrivant par la conduite 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).. La fraction lourde peut éventuellement contenir des particules solides tels que des solides minéraux. Elle peut éventuellement contenir des métaux contenus dans des structures hydrocarbonés tels que des composés organo-métalliques plus ou moins solubles. Par le terme fines, on entend des fines résultant d'une attrition physique ou chimique du catalyseur. Elles peuvent être microniques ou sub-microniques. Ces particules minérales contiennent alors les composants actifs de ces catalyseurs sans que la liste suivante soit limitative : alumine, silice, titane, zircone, oxyde de cobalt, oxyde de fer, tungstène, oxyde de rhuthénium... Ces solides minéraux peuvent se présenter sous la forme d'oxyde mixte calciné : par exemple, alumine-cobalt, alumine-fer, alumine-silice, alumine-zircone, alumine-titane, alumine-silice-cobalt, alumine-zircone-cobalt,....

Elle peut également contenir des métaux au sein de structures hydrocarbonés, pouvant éventuellement contenir de l'oxygène. Elle peut contenir des composés organo-métalliques plus ou moins solubles. Plus particulièrement, ces composés peuvent être à base de silicium. Il peut s'agir par exemple des agents anti-moussants utilisés dans le procédé de synthèse. Par exemple, les solutions d'un composé du silicium de type silicone ou émulsion d'huile silicone sont plus particulièrement contenus dans la fraction lourde.

Par ailleurs, les fines de catalyseurs décrites ci-dessus peuvent avoir une teneur en silice supérieure à la formulation du catalyseur, résultant de l'interaction intime entre les fines de catalyseurs et des agents anti-moussants décrits ci-dessus.

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention.

### Etape (b)

Cette fraction est admise en présence d'hydrogène (conduite 6) dans une zone (7) (lit de garde multifonctionnel) contenant au moins un catalyseur d'hydrotraitement qui a pour objectif de réduire la teneur en composés oléfiniques et insaturés ainsi que d'hydrotraiter les composés oxygénés (alcools) présents dans la fraction lourde décrite ci-dessus et réduire la teneur en particules minérales solides et éventuellement réduire la teneur en composés métalliques néfastes pour le catalyseur d'hydroisomérisation-hydrocraquage.

Les catalyseurs utilisés dans cette étape (b) sont des catalyseurs d'hydrotraitement non craquants ou peu craquants comportant au moins un métal du groupe VIII et/ou du groupe VI de la classification périodique des éléments.
Avantageusement, au moins un élément choisi parmi P, B, Si est déposé sur le support.

Ces catalyseurs peuvent être préparés par toutes les méthodes connues de l'homme de l'art ou bien peuvent être acquis auprès de sociétés spécialisées dans la fabrication et la vente de catalyseurs.

Les catalyseurs ou lits de garde utilisés selon l'invention peuvent avoir la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

Les catalyseurs de lit de garde selon la revendication 1 sont imprégnés par une phase hydro-déshydrogénante: la phase NiMo est utilisée.

Ces catalyseurs ou lits de garde utilisés selon l'invention peuvent présenter de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Ces catalyseurs ou lits de garde utilisés selon l'invention peuvent présenter de la macroporosité. Selon l'invention, le catalyseur comprend un volume macroporeux pour un diamètre moyen à 50 nm supérieur à 0.1 cm³/g et un volume total supérieur à 0,60 cm³/g. Dans un autre mode de réalisation, le lit de garde comprend également un catalyseur ayant un volume mercure pour un diamètre de pores supérieur à 1 microns est supérieur à 0.2 cm³/g et de préférence supérieur à 0.5 cm³/g, et un volume mercure pour un diamètre de pores supérieur à 10 microns est supérieur à 0.25 cm³/g, ledit catalyseur étant avantageusement placé en amont du catalyseur selon l'invention.
Ces deux catalyseurs peuvent de manière avantageuse être associés dans un lit mixte ou un lit combiné.

Dans un deuxième mode de réalisation, le lit de garde comprend également au moins un catalyseur ayant un le volume mercure pour un diamètre de pores supérieur à 50 nm est supérieur à 0,25 cm³/g, le volume mercure pour un diamètre de pores supérieur à 100 nm est supérieur à 0,15 cm³/g et le volume poreux total est supérieur à 0.80 cm³/g.

Dans le réacteur d'hydrotraitement (7), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350°C, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 NI/l/h, de préférence entre 100 et 2000NI/l/h et de façon encore plus préférée entre 250 et 1500 NI/l/h. Le débit de charge est tel que la vitesse volumique horaire est comprises entre 0,1 et 10h⁻¹, de préférence entre 0,2 et 5h⁻¹ et de manière encore plus préférée entre 0,2 et 3h⁻¹. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

A l'issue de l'étape d'hydrotraitement et épuration et/ou décontamination de la fraction lourde, la teneur en particules solides est inférieure à 20 ppm, de manière préférée inférieure à 10 ppm et de manière encore plus préférée inférieure à 5 ppm. A l'issue de l'étape d'hydrotraitement et éventuellement épuration et/ou décontamination de la fraction lourde, la teneur en silicium soluble est inférieure à 5 ppm, de manière préférée inférieure à 2 ppm et de manière encore plus préférée inférieure à 1 ppm.

### Etape (c)

L'effluent (conduite 8) issu du réacteur (7) d'hydrotraitement est éventuellement introduit dans une zone (9) d'enlèvement d'eau qui a pour but d'éliminer au moins en partie l'eau produite lors des réactions d'hydrotraitement. Cette élimination d'eau peut s'effectuer avec ou sans élimination de la fraction gazeuse C₄ moins qui est généralement produite lors de l'étape d'hydrotraitement. On entend par élimination de l'eau, l'élimination de l'eau produite par les réactions d'hydrodeoxygénation (HDO) des alcools mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation...

### Etape (d)

La fraction lourde (éventuellement hydrotraitée) ainsi séchée est alors introduite (conduite 10) ainsi qu'éventuellement un flux d'hydrogène (conduite 11), dans la zone (12) contenant le catalyseur d'hydroisomérisation / hydrocraquage. Une autre éventualité du procédé aussi selon l'invention consiste à envoyer la totalité de l'effluent sortant du réacteur d'hydrotraitement (sans séchage) dans le réacteur contenant le catalyseur d'hydroisomérisation / hydrocraquage et de préférence en même temps qu'un flux d'hydrogène.
Avant utilisation dans la réaction, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000 litres hydrogène/ litre catalyseur. Notons également que toute méthode de réduction ex-situ est convenable.
Les conditions opératoires dans lesquelles est effectuée cette étape (d) sont :
La pression est maintenue entre 2 et 150 bars et de préférence entre 5 et 100 bars et avantageusement de 10 à 90 bars, la vitesse spatiale est comprise entre 0,1 h⁻¹ et 10 h⁻¹ et de préférence entre 0,2 et 7h⁻¹ est avantageusement entre 0,5 et 5,0h⁻¹. Le taux d'hydrogène est compris entre 100 et 2000 Normaux litres d'hydrogène par litre de charge et par heure et préférentiellement entre 150 et 1500 litres d'hydrogène par litre de charge.
La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.
L'étape d'hydroisomérisation et d'hydrocraquage est conduite dans des conditions telles que la conversion par passe en produits à points d'ébullition supérieurs ou égaux à 370°C en des produits ayant des points d'ébullition inférieurs à 370°C est supérieure à 80% poids, et de façon encore plus préférée d'au moins 85%, de préférence supérieure à 88%, de manière à obtenir des distillats moyens (gazole et kérosène) ayant des propriétés à froid suffisamment bonnes (point d'écoulement, point de congélation) pour satisfaire aux spécifications en vigueur pour ce type de carburant.
Les deux étapes, hydrotraitement et hydroisomérisation-hydrocraquage, peuvent être réalisées sur les deux types de catalyseurs dans deux ou plusieurs réacteurs différents, ou/et dans un même réacteur.

### Etape (e)

L'effluent (fraction dite hydrocraquée / hydroisomérisée) en sortie du réacteur (12), étape (d), est envoyé dans un train de distillation (13), qui intègre une distillation atmosphérique et éventuellement une distillation sous vide, qui a pour but de séparer les produits de conversion de point d'ébullition inférieur à 340°C et de préférence inférieur à 370°C et incluant notamment ceux formés lors de l'étape (d) dans le réacteur (12), et de séparer la fraction résiduelle dont le point initial d'ébullition est généralement supérieur à au moins 340°C et de préférence supérieur ou égal à au moins 370°C. Parmi les produits de conversion et hydroisomérisés, il est séparé outre les gaz légers C1-C4 (conduite 14) au moins une fraction essence (conduite 15), et au moins une fraction distillat moyen kérosène (conduite 16) et gazole (conduite 17). La fraction résiduelle dont le point initial d'ébullition est généralement supérieur à au moins 340°C et de préférence supérieur ou égal à au moins 370°C est recyclée (conduite18) en tête du réacteur (12) d'hydroisomérisation et d'hydrocraquage.
Il peut être également avantageux de recycler (conduite 19) dans l'étape (d) (réacteur 12) une partie du kérosène et/ou du gazole ainsi obtenus.

### Un autre mode de réalisation de l'invention comprend les étapes suivantes :

a) Fractionnement (étape a) de la charge en au moins 3 fractions :
   - au moins une fraction intermédiaire ayant un point d'ébullition initial T1 compris entre 120 et 200°C, et un point d'ébullition final T2 supérieur à 300°C et inférieur à 410°C,
   - au moins une fraction légère bouillant au-dessous de la fraction intermédiaire,
   - au moins une fraction lourde bouillant au-dessus de la fraction intermédiaire.
b) Hydrotraitement /épuration (étape b) d'au moins une partie de ladite fraction intermédiaire sur un lit de garde selon l'invention
c) puis passage (étape d) dans un procédé de traitement d'au moins une partie de la fraction hydrotraitée sur un catalyseur amorphe d'hydrocraquage/hydroisomérisation.
   f) Passage (étape f) dans un procédé de traitement d'une partie au moins de ladite fraction lourde sur un catalyseur amorphe d'hydrocraquage/hydroisomérisation avec une conversion des produits 370°C⁺ en produits 370°C moins supérieure à 80% poids.
   e) et g) Distillation (étapes e et g) d'au moins une partie des fractions hydrocraquées / hydroisomérisées pour obtenir des distillats moyens.

La description de ce mode de réalisation sera faite en se référant à la figure 3 sans que la figure 3 limite l'interprétation.

### Etape (a)

L'effluent issu de l'unité de synthèse Fischer-Tropsch comporte majoritairement des paraffines, mais contient aussi des oléfines et des composés oxygénés tels que des alcools. Il contient aussi de l'eau, du CO₂, du CO et de l'hydrogène non réagi ainsi que des composés hydrocarbures légers C1 à C4 sous forme de gaz. L'effluent issu de l'unité de synthèse Fischer-Tropsch arrivant par la conduite (1) est fractionné dans un zone de fractionnement (2) en au moins trois fractions :
- au moins une fraction légère (sortant par la conduite 3) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C.
- au moins une fraction intermédiaire (conduite 4) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 5) comportant les composés ayant des points d'ébullition supérieurs au point de coupe T2 précédemment défini.

Une coupe entre un point d'ébullition T1 comprise entre 120 - 200°C et T2 supérieure à 300°C et inférieure à 370°C est préférée. La coupe à 370°C est encore plus préférée c'est à dire la fraction lourde est une coupe 370°C+.
Le fait de couper à 370°C permet de séparer au moins 90% pds des oxygénés et des oléfines, et le plus souvent au moins 95% pds. La coupe lourde à traiter est alors purifiée et une élimination des hétéroatomes ou insaturés par hydrotraitement n'est alors pas nécessaire.
Le fractionnement est obtenu ici par distillation, mais il peut être réalisé en une ou plusieurs étapes et par d'autres moyens que la distillation.
Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.
La fraction légère n'est pas traitée selon le procédé de l'invention mais peut par exemple constituer une bonne charge pour une unité pétrochimique et plus particulièrement pour un vapocraqueur (installation 6 de vapocraquage).
Les fractions plus lourdes précédemment décrites sont traitées selon le procédé de l'invention.

### Etape (b)

Ladite fraction intermédiaire est admise via la ligne (4), en présence d'hydrogène amené par la tubulure (7), dans une zone d'hydrotraitement (8) contenant au moins un catalyseur d'hydrotraitement (lit de garde multifonctionnel). L'objectif de cet hydrotraitement est de réduire la teneur en composés oléfiniques et insaturés ainsi que d'hydrotraiter les composés oxygénés (alcools) présents et réduire la teneur en particules minérales solides et éventuellement réduire la teneur en composés métalliques néfastes pour le catalyseur d'hydroisomérisation-hydrocraquage.

Le catalyseur de lit de garde selon l'invention comprend du nickel, du molybdène, et comporte au moins un support alumine. On utilise une combinaison d'au moins un métal ou composé de métal du groupe VI: le molybdène et d'au moins un métal ou composé de métal du groupe VIII: le nickel de la classification périodique des éléments. La concentration en métal du groupe VIII non noble, lorsque celui-ci est utilisé, est de 0,01-15% en poids par rapport au catalyseur fini.
Avantageusement, au moins un élément choisi parmi P, B, Si est déposé sur le support.
Ce catalyseur pourra contenir avantageusement du phosphore ; en effet, ce composé apporte deux avantages aux catalyseurs d'hydrotraitement : une facilité de préparation lors notamment de l'imprégnation des solutions de nickel et de molybdène, et une meilleure activité d'hydrogénation.
Dans un catalyseur préféré la concentration totale en métaux des groupes VI et VIII, exprimée en oxydes de métaux, est comprise entre 5 et 40% en poids et de préférence entre 7 et 30% en poids et le rapport pondéral exprimé en oxyde de métal (ou de métaux) du groupe VI sur métal (ou métaux) du groupe VIII est compris entre 1.25 et 20 et de préférence entre 2 et 10. Avantageusement, s'il y a du phosphore, la concentration en oxyde de phosphore P2O5 sera inférieure à 15% en poids et de préférence inférieure à 10% en poids.
On peut utiliser également un catalyseur contenant du bore et du phosphore avantageusement le bore et le phosphore sont des éléments promoteurs déposés sur le support, et par exemple le catalyseur selon le brevet EP-297,949. La somme des quantités de bore et de phosphore, exprimées respectivement en poids de trioxyde de bore et pentoxyde de phosphore, par rapport au poids de support, est d'environ 5 à 15% et le rapport atomique bore sur phosphore est d'environ 1:1 à 2:1 et au moins 40% du volume poreux total du catalyseur fini est contenu dans des pores de diamètre moyen supérieur à 13 nanomètres. De façon préférée, la quantité de métal du groupe VI tel que le molybdène ou le tungstène, est telle que le rapport atomique phosphore sur métal du groupe VIB est d'environ 0,5:1 à 1,5:1; les quantités de métal du groupe VIB et de métal du groupe VIII, tel que le nickel ou le cobalt, sont telles que le rapport atomique métal du groupe VIII sur métal du groupe VIB est d'environ 0,3:1 à 0,7:1. Les quantités de métal du groupe VIB exprimées en poids de métal par rapport au poids de catalyseur fini est d'environ 2 à 30% et la quantité de métal du groupe VIII exprimée en poids de métal par rapport au poids de catalyseur fini est d'environ 0,01 à 15%.
Un autre catalyseur particulièrement avantageux contient du silicium promoteur déposé sur le support. Un catalyseur intéressant contient BSi ou PSi.

Les catalyseurs de lit de garde selon l'invention sont des catalyseurs NiMo sur alumine, Avantageusement, on choisira de l'alumine éta ou gamma.

Ces métaux sont déposés sur un support qui est une alumine. Ces catalyseurs peuvent être préparés par toutes les méthodes connues de l'homme de l'art ou bien peuvent être acquis auprès de sociétés spécialisées dans la fabrication et la vente de catalyseurs.

Les catalyseurs de lits de garde utilisés selon l'invention peuvent avoir la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.
Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

Les catalyseurs de lit de garde selon la revendication 1 sont imprégnés par une phase hydro-déshydrogénante: la phase NiMo est utilisée.

Ces catalyseurs ou lits de garde utilisés selon l'invention peuvent présenter de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Ces catalyseurs ou lits de garde utilisés selon l'invention peuvent présenter de la macroporosité. Selon l'invention, le catalyseur comprend un volume macroporeux pour un diamètre moyen à 50 nm supérieur à 0.1 cm³/g et un volume total supérieur à 0,60 cm³/g. Dans un autre mode de réalisation, le lit de garde comprend également un catalyseur ayant un volume mercure pour un diamètre de pores supérieur à 1 microns est supérieur à 0.2 cm³/g et de préférence supérieur à 0.5 cm³/g, et un volume mercure pour un diamètre de pores supérieur à 10 microns est supérieur à 0.25 cm³/g, ledit catalyseur étant avantageusement placé en amont du catalyseur selon l'invention.
Ces deux catalyseurs peuvent de manière avantageuse être associés dans un lit mixte ou un lit combiné.

Dans un deuxième mode de réalisation, le lit de garde comprend également au moins un catalyseur ayant un le volume mercure pour un diamètre de pores supérieur à 50 nm est supérieur à 0,25 cm³/g, le volume mercure pour un diamètre de pores supérieur à 100 nm est supérieur à 0,15 cm³/g et le volume poreux total est supérieur à 0.80 cm³/g.

Dans le réacteur d'hydrotraitement (8), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 NI/l/h, de préférence entre 100 et 2000NI/l/h et de façon encore plus préférée entre 250 et 1500 NI/l/h. Le débit de charge est tel que la vitesse volumique horaire est comprises entre 0,1 et 10h⁻¹, de préférence entre 0,2 et 5h⁻¹ et de manière encore plus préférée entre 0,2 et 3h⁻¹. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

A l'issue de l'étape d'hydrotraitement et épuration et/ou décontamination de la fraction lourde, la teneur en particules solides est inférieure à 20 ppm, de manière préférée inférieure à 10 ppm et de manière encore plus préférée inférieure à 5 ppm. A l'issue de l'étape d'hydrotraitement et éventuellement épuration et/ou décontamination de la fraction lourde, la teneur en silicium soluble est inférieure à 5 ppm, de manière préférée inférieure à 2 ppm et de manière encore plus préférée inférieure à 1 ppm .

### Etape (c)

L'effluent issu du réacteur d'hydrotraitement est éventuellement introduit dans une zone (9) d'enlèvement d'eau qui a pour but d'éliminer au moins une partie de l'eau produite lors des réactions d'hydrotraitement. Cette élimination d'eau peut s'effectuer avec ou sans élimination de la fraction gazeuse C₄ moins qui est généralement produite lors de l'étape d'hydrotraitement. On entend par élimination de l'eau, l'élimination de l'eau produite par les réactions d'hydrodeoxygénation (HDO) des alcools, mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

### Etape d

La fraction ainsi éventuellement séchée est alors introduite (conduite 10), ainsi qu'éventuellement un flux d'hydrogène, (conduite 11) dans la zone (12) contenant le catalyseur d'hydroisomérisation / d'hydrocraquage. Une autre éventualité du procédé aussi selon l'invention consiste à envoyer la totalité de l'effluent sortant du réacteur d'hydrotraitement (sans séchage) dans le réacteur contenant le catalyseur amorphe d'hydroisomérisation / d'hydrocraquage et de préférence en même temps qu'un flux d'hydrogène.
Les conditions opératoires dans lesquelles est effectuée cette étape (d) sont :
La pression est maintenue entre 2 et 150 bars et de préférence entre 5 et 100 bars et avantageusement de 10 à 90 bars, la vitesse spatiale est comprise entre 0,1 h⁻¹ et 10 h⁻¹ et de préférence entre 0,2 et 7h⁻¹ est avantageusement entre 0,5 et 5,0h⁻¹. Le taux d'hydrogène est compris entre 100 et 2000 Normaux litres d'hydrogène par litre de charge et par heure et préférentiellement entre 150 et 1500 litres d'hydrogène par litre de charge.
La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.
Les deux étapes, hydrotraitement et hydroisomérisation-hydrocraquage, peuvent être réalisées sur les deux types de catalyseurs dans deux ou plusieurs réacteurs différents, ou/et dans un même réacteur.
L'étape (d) d'hydroisomérisation et d'hydrocraquage est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.
Ainsi dans cette étape (d), on cherche à favoriser l'hydroisomérisation plutôt que l'hydrocraquage.

### Etape (f)

Ladite fraction lourde dont les points d'ébullition sont supérieurs au point de coupe T2, précédemment défini, est introduite via la ligne (5) dans une zone (13) où elle est mise, en présence d'hydrogène (26), au contact d'un catalyseur amorphe d'hydroisomérisation/hydrocraquage afin de produire une coupe distillat moyen (kérosène + gazole) présentant de bonnes propriétés à froid.
Le catalyseur utilisé dans la zone (13) de l'étape (f) pour réaliser les réactions d'hydrocraquage et d'hdydroisomérisation de la fraction lourde, définie selon l'invention, est du même type que celui présent dans le réacteur (12). Cependant, il est à noter que les catalyseurs mis en oeuvre dans les réacteurs (12) et (13) peuvent être identiques ou différents.
Durant cette étape (f) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats. La conversion en produits ayant des points d'ébullition supérieurs ou égal à 370°C en produits à points d'ébullition inférieurs à 370°C est supérieure à 80% poids, souvent d'au moins 85% et de préférence supérieure ou égal à 88%. Par contre, les conversions des produits à point d'ébullition supérieurs ou égaux à 260°C en produits à points d'ébullition inférieurs à 260°C est d'au plus 90% poids, généralement d'au plus 70% ou 80%, et de préférence d'au plus 60% poids.
Dans cette étape (f), on cherchera donc à favoriser l'hydrocraquage, mais de préférence en limitant le craquage du gazole.

Le choix des conditions opératoires permet d'ajuster finement la qualité des produits (diesel, kerosène) et en particulier les propriétés à froid du kerosène, tout en conservant un bon rendement en diesel et/ou kerosène. Le procédé selon l'invention permet de façon tout à fait intéressante de produire à la fois du kérosène et du gasoil et qui sont de bonne qualité.

### Etape (g)

L'effluent en sortie du réacteur (12), étape (d) est envoyé dans un train de distillation, qui intègre une distillation atmosphérique et éventuellement une distillation sous vide, et qui a pour but de séparer d'une part les produits légers inévitablement formés lors de l'étape (d) par exemple les gaz (C₁-C₄) (conduite 14) et une coupe essence (conduite 19), et de distiller au moins une coupe gazole (conduite 17) et kérosène (conduite 16). Les fractions gazole et kérosène peuvent être recyclées (conduite 25) en partie, conjointement ou de façon séparée, en tête du réacteur (12) d'hydroisomérisation /hydrocraquage étape (d).
L'effluent en sortie de l'étape (f), est soumis à une étape de séparation dans un train de distillation de manière à séparer d'une part les produits légers inévitablement formés lors de l'étape (f) par exemple les gaz (C₁-C₄) (conduite 18) et une coupe essence (conduite 19), à distiller une coupe gazole (conduite 21) et kérosène (conduite 20) et à distiller la fraction (conduite 22) bouillant au-dessus de gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction non hydrocraquée est avantageusement recyclée en tête du réacteur (conduite 13) d'hydroisomérisation /hydrocraquage étape (f).
Il peut être également avantageux de recycler une partie du kérosène et/ou du gazole dans l'étape (d), l'étape (f) ou les deux. De façon préférée, l'une au moins des fractions kérosène et/ou gazole est recyclée en partie (conduite 25) dans l'étape (d) (zone 12). On a pu constater qu'il est avantageux de recycler une partie du kérosène pour améliorer ses propriétés à froid.
Avantageusement et dans le même temps, la fraction non hydrocraquée est recyclée en partie dans l'étape (f) (zone 13).
Il va sans dire que les coupes gazole et kérosène sont de préférence récupérées séparément, mais les points de coupe sont ajustés par l'exploitant en fonction de ses besoins.
Sur la figure 3, on a représenté 2 colonnes (23) et (24) de distillation, mais une seule peut être utilisée pour traiter l'ensemble des coupes issues de zones (12) et (13).

Sur la figure 3, on a représenté seulement le recyclage du kérosène sur le catalyseur du réacteur (12). Il va sans dire qu'on peut aussi bien recycler une partie du gazole (séparément ou avec le kérosène) et de préférence sur le même catalyseur que le kérosène. On peut également recycler une partie du kérosène et/ou du gazole produits dans les lignes (20) (21).

### Un autre mode de réalisation de l'invention comprend les étapes suivantes :

a) éventuel fractionnement de la charge en au moins une fraction lourde à point d'ébullition initial compris entre 120 et 200°C, et au moins une fraction légère bouillant en-dessous de ladite fraction lourde,
b) hydrotraitement d'une partie au moins de la charge ou de la fraction lourde, et épuration ou décontamination de ladite charge lourde sur un lit de garde selon l'invention éventuellement suivi (étape c) d'élimination d'au moins une partie de l'eau,
d) passage d'une partie au moins de l'effluent ou de la fraction éventuellement hydrotraité dans un procédé selon l'invention sur un premier catalyseur d'hydroisomérisation / hydrocraquage sans halogène ajouté et contenant au moins un métal noble du groupe VIII,
e) distillation de l'effluent hydroisomérisé / hydrocraqué pour obtenir des distillats moyens (kérosène, gasoil) et une fraction résiduelle bouillant au-dessus des distillats moyens,
f) sur un second catalyseur d'hydroisomérisation / hydrocraquage sans halogène ajouté et contenant au moins un métal noble du groupe VIII, passage d'au moins une partie de ladite fraction lourde résiduelle et/ou d'une partie desdits distillats moyens, et distillation de l'effluent résultant pour obtenir des distillats moyens.

La description de ce mode de réalisation sera faite en se référant aux figures 4 et 5, sans que ces figures limitent l'interprétation.

### Etape a)

Lorsque cette étape est mise en oeuvre, l'effluent issu de l'unité de synthèse Fischer-Tropsch est fractionné (par exemple par distillation) en au moins deux fractions : au moins une fraction légère et au moins une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C.
La fraction lourde présente généralement des teneurs en paraffines d'au moins 50% poids. Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les 2 fractions décrites ci-dessus.
La fraction légère n'est pas traitée selon le procédé de l'invention mais peut par exemple constituer une bonne charge pour la pétrochimie et plus particulièrement pour une unité de vapocraquage. Au moins une fraction lourde précédemment décrite est traitée selon le procédé de l'invention.

### Etape b)

Cette fraction ou une partie au moins de la charge initiale, est admise via la ligne (1) en présence d'hydrogène (amené par la conduite (2)) dans une zone (3) contenant au moins un catalyseur d'hydrotraitement (lit de garde multifonctionnel) qui a pour objectif de réduire la teneur en composés oléfiniques et insaturés ainsi que d'hydrotraiter les composés oxygénés (alcools) présents dans la fraction lourde décrite ci-dessus. La fraction lourde peut éventuellement contenir des particules solides tels que des solides minéraux. Elle peut éventuellement contenir des métaux contenus dans des structures hydrocarbonés tels que des composés organo-métalliques plus ou moins solubles. Par le terme fines, on entend des fines résultant d'une attrition physique ou chimique du catalyseur. Elles peuvent être microniques ou sub-microniques. Ces particules minérales contiennent alors les composants actifs de ces catalyseurs sans que la liste suivante soit limitative : alumine, silice, titane, zircone, oxyde de cobalt, oxyde de fer, tungstène, oxyde de rhuthénium... Ces solides minéraux peuvent se présenter sous la forme d'oxyde mixte calciné : par exemple, alumine-cobalt, alumine-fer, alumine-silice, alumine-zircone, alumine-titane, alumine-silice-cobalt, alumine-zircone-cobalt,....

Elle peut également contenir des métaux au sein de structures hydrocarbonés, pouvant éventuellement contenir de l'oxygène. Elle peut contenir des composés organométalliques plus ou moins solubles. Plus particulièrement, ces composés peuvent être à base de silicium. Il peut s'agir par exemple des agents anti-moussants utilisés dans le procédé de synthèse. Par exemple, les solutions d'un composé du silicium de type silicone ou émulsion d'huile silicone sont plus particulièrement contenus dans la fraction lourde.

Par ailleurs, les fines de catalyseurs décrites ci-dessus peuvent avoir une teneur en silice supérieure à la formulation du catalyseur, résultant de l'interaction intime entre les fines de catalyseurs et des agents anti-moussants décrits ci-dessus.

Le catalyseur de lit de garde selon l'invention comprend du nickel, du molybdène, et comporte au moins un support alumine.

On utilise une combinaison d'au moins un métal ou composé de métal du groupe VI : le molybdène et d'au moins un métal ou composé de métal du groupe VIII: le nickel de la classification périodique des éléments. La concentration en métal du groupe VIII non noble, lorsque celui-ci est utilisé, est de 0,01-15% en poids par rapport au catalyseur fini.
Avantageusement, au moins un élément choisi parmi P, B, Si est déposé sur le support. Ce catalyseur pourra contenir avantageusement du phosphore ; en effet, ce composé apporte deux avantages aux catalyseurs d'hydrotraitement : une facilité de préparation lors notamment de l'imprégnation des solutions de nickel et de molybdène, et une meilleure activité d'hydrogénation.

Dans un catalyseur préféré, la concentration totale en métaux des groupes VI et VIII, exprimée en oxydes de métaux, est comprise entre 5 et 40% en poids et de préférence entre 7 et 30% en poids et le rapport pondéral exprimé en oxyde de métal (ou de métaux) du groupe VI sur métal (ou métaux) du groupe VIII est compris entre 1.25 et 20 et de préférence entre 2 et 10. Avantageusement, s'il y a du phosphore, la concentration en oxyde de phosphore P2O5 sera inférieure à 15% en poids et de préférence inférieure à 10% en poids.

On peut utiliser également un catalyseur contenant du bore et du phosphore avantageusement le bore et le phosphore sont des éléments promoteurs déposés sur le support, et par exemple le catalyseur selon le brevet EP-297,949. La somme des quantités de bore et de phosphore, exprimées respectivement en poids de trioxyde de bore et pentoxyde de phosphore, par rapport au poids de support, est d'environ 5 à 15% et le rapport atomique bore sur phosphore est d'environ 1:1 à 2:1 et au moins 40% du volume poreux total du catalyseur fini est contenu dans des pores de diamètre moyen supérieur à 13 nanomètres. De façon préférée, la quantité de métal du groupe VI tel que le molybdène ou le tungstène, est telle que le rapport atomique phosphore sur métal du groupe VIB est d'environ 0,5:1 à 1,5:1; les quantités de métal du groupe VIB et de métal du groupe VIII, tel que le nickel ou le cobalt, sont telles que le rapport atomique métal du groupe VIII sur métal du groupe VIB est d'environ 0,3:1 à 0,7:1. Les quantités de métal du groupe VIB exprimées en poids de métal par rapport au poids de catalyseur fini est d'environ 2 à 30% et la quantité de métal du groupe VIII exprimée en poids de métal par rapport au poids de catalyseur fini est d'environ 0,01 à 15%.

Les catalyseurs de lit de garde selon l'invention sont des catalyseurs NiMo sur alumine. Avantageusement, on choisira de l'alumine éta ou gamma.

Un autre catalyseur particulièrement avantageux contient du silicium promoteur déposé sur le support. Un catalyseur intéressant contient BSi ou PSi.

Ces métaux sont déposés sur un support qui est une alumine. Ces catalyseurs peuvent être préparés par toutes les méthodes connues de l'homme de l'art ou bien peuvent être acquis auprès de sociétés spécialisées dans la fabrication et la vente de catalyseurs.

Les catalyseurs ou lits de garde utilisés selon l'invention peuvent avoir la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

Les catalyseurs de lit de garde selon la revendication 1 sont imprégnés par une phase hydro-déshydrogénante: la phase NiMo est utilisée.

Ces catalyseurs ou lits de garde utilisés selon l'invention peuvent présenter de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Ces catalyseurs ou lits de garde utilisés selon l'invention peuvent présenter de la macroporosité. Selon l'invention, le catalyseur comprend un volume macroporeux pour un diamètre moyen à 50 nm supérieur à 0.1 cm³/g et un volume total supérieur à 0,60 cm³/g. Dans un autre mode de réalisation, le lit de garde comprend également un catalyseur ayant un volume mercure pour un diamètre de pores supérieur à 1 microns est supérieur à 0.2 cm³/g et de préférence supérieur à 0.5 cm³/g, et un volume mercure pour un diamètre de pores supérieur à 10 microns est supérieur à 0.25 cm³/g, ledit catalyseur étant avantageusement placé en amont du catalyseur selon l'invention.
Ces deux catalyseurs peuvent de manière avantageuse être associés dans un lit mixte ou un lit combiné.

Dans un deuxième mode de réalisation, le lit de garde comprend également au moins un catalyseur ayant un le volume mercure pour un diamètre de pores supérieur à 50 nm est supérieur à 0,25 cm³/g, le volume mercure pour un diamètre de pores supérieur à 100 nm est supérieur à 0,15 cm³/g et le volume poreux total est supérieur à 0.80 cm³/g.

Dans le réacteur d'hydrotraitement (3), la charge est mise en contact en présence d'hydrogène et du catalyseur à des températures et des pressions opératoires permettant de réaliser l'hydrodeoxygénation (HDO) des alcools et l'hydrogénation des oléfines présents dans la charge. Les températures réactionnelles utilisées dans le réacteur d'hydrotraitement sont comprises entre 100 et 350, de préférence entre 150 et 300°C, de façon encore plus préférée entre 150 et 275°C et mieux encore entre 175 et 250°C. La gamme de pression totale utilisée varie de 5 à 150 bars, de préférence entre 10 et 100 bars et de manière encore plus préférée entre 10 et 90 bars. L'hydrogène qui alimente le réacteur d'hydrotraitement est introduit à un débit tel que le rapport volumique hydrogène/hydrocarbures soit compris entre 100 à 3000 NI/l/h, de préférence entre 100 et 2000NI/l/h et de façon encore plus préférée entre 250 et 1500 NI/l/h. Le débit de charge est tel que la vitesse volumique horaire est comprises entre 0,1 et 10h⁻¹, de préférence entre 0,2 et 5h⁻¹ et de manière encore plus préférée entre 0,2 et 3h⁻¹. Dans ces conditions, la teneur en molécules insaturées et oxygénées est réduite à moins de 0,5% et à environ moins de 0,1% en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 30% pds, de préférence est inférieure à 20% et de façon encore plus préférée est inférieure à 10%.

A l'issue de l'étape d'hydrotraitement et épuration et/ou décontamination de la fraction lourde, la teneur en particules solides est inférieure à 20 ppm, de manière préférée inférieure à 10 ppm et de manière encore plus préférée inférieure à 5 ppm . A l'issue de l'étape d'hydrotraitement et éventuellement épuration et/ou décontamination de la fraction lourde, la teneur en silicium soluble est inférieure à 5 ppm, de manière préférée inférieure à 2 ppm et de manière encore plus préférée inférieure à 1 ppm.

### Etape c)

L'effluent (conduite 4) issu du réacteur (3) d'hydrotraitement est éventuellement introduit dans une zone (5) d'enlèvement d'eau qui a pour but d'éliminer au moins en partie l'eau produite lors des réactions d'hydrotraitement. Cette élimination d'eau peut s'effectuer avec ou sans élimination de la fraction gazeuse C₄ moins qui est généralement produite lors de l'étape d'hydrotraitement. On entend par élimination de l'eau, l'élimination de l'eau produite par les réactions d'hydrodéoxygénation (HDO) des alcools mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

### Etape d)

Une partie au moins et de préférence la totalité de la fraction hydrocarbonée (une partie au moins de la charge ou une partie au moins de la fraction lourde de l'étape a) ou une partie au moins de la fraction ou de la charge hydrotraitée et éventuellement séchée) est alors introduite (conduite 6) ainsi qu'éventuellement un flux d'hydrogène (conduite 7) dans la zone (8) contenant ledit premier catalyseur d'hydroisomérisation / hydrocraquage. Une autre éventualité du procédé aussi selon l'invention consiste à envoyer une partie ou la totalité de l'effluent sortant du réacteur d'hydrotraitement (sans séchage) dans le réacteur contenant le catalyseur d'hydroisomérisation / d'hydrocraquage et de préférence en même temps qu'un flux d'hydrogène.
Avant utilisation dans la réaction, le métal contenu dans le catalyseur doit être réduit. Une des méthodes préférées pour conduire la réduction du métal est le traitement sous hydrogène à une température comprise entre 150°C et 650°C et une pression totale comprise entre 0,1 et 25 Mpa. Par exemple, une réduction consiste en un palier à 150°C de 2 heures puis une montée en température jusqu'à 450°C à la vitesse de 1°C/min puis un palier de 2 heures à 450°C ; durant toute cette étape de réduction, le débit d'hydrogène est de 1000 litres hydrogène/ litre catalyseur. Notons également que toutes méthode de réduction ex-situ est convenable.

Les conditions opératoires dans lesquelles est effectuée cette étape (d) sont :
La pression est maintenue entre 2 et 150 bars et de préférence entre 5 et 100 bars et avantageusement de 10 à 90 bars, la vitesse spatiale est comprise entre 0,1 h⁻ et 10 h⁻¹ et de préférence entre 0,2 et 7h⁻¹ est avantageusement entre 0,5 et 5,0h⁻¹. Le taux d'hydrogène est compris entre 100 et 2000 Normaux litres d'hydrogène par litre de charge et par heure et préférentiellement entre 150 et 1500 litres d'hydrogène par litre de charge.
La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.
Les deux étapes, hydrotraitement et hydroisomérisation-hydrocraquage, peuvent être réalisées sur les deux types de catalyseurs dans deux ou plusieurs réacteurs différents, ou/et dans un même réacteur.

### Etape e)

L'effluent hydroisomérisé / hydrocraqué en sortie du réacteur (8), étape (d), est envoyé dans un train de distillation (9) qui intègre une distillation atmosphérique et éventuellement une distillation sous vide qui a pour but de séparer les produits de conversion de point d'ébullition inférieur à 340°C et de préférence inférieur à 370°C et incluant notamment ceux formés lors de l'étape (d) dans le réacteur (8), et de séparer la fraction résiduelle dont le point initial d'ébullition est généralement supérieur à au moins 340°C et de préférence supérieur ou égal à au moins 370°C. Parmi les produits de conversion et hydroisomérisés il est séparé, outre les gaz légers C1-C4 (conduite 10) au moins une fraction essence (conduite 11), et au moins une fraction distillat moyen kérosène (conduite 12) et gazole (conduite 13).

### Etape f)

Le procédé selon l'invention utilise une seconde zone (16) contenant un catalyseur d'hydroisomérisation / hydrocraquage (dit second catalyseur). Il passe sur ce catalyseur, en présence d'hydrogène (conduite 15) un effluent choisi parmi une partie du kérosène produit (conduite 12), une partie du gazole (conduite 13) et la fraction résiduelle et de préférence, la fraction résiduelle dont le point initial d'ébullition est généralement supérieur à au moins 370°C.
Le catalyseur présent dans le réacteur (16) de l'étape (f) du procédé selon l'invention est de la même façon que pour l'étape d), de type acide amorphe et à base d'au moins un métal noble de groupe VIII ; cependant il peut être identique ou différent de celui de l'étape d).

Durant cette étape la fraction entrant dans le réacteur (16) subit au contact du catalyseur et en présence d'hydrogène des réactions d'hydroisomérisation et/ou d'hydrocraquage qui vont permettre d'améliorer la qualité des produits formés et plus particulièrement les propriétés à froid du kérosène et du gazole, et d'obtenir des rendements en distillat amélioré par rapport à l'art antérieur.
Le choix des conditions opératoires permet d'ajuster finement la qualité des produits (distillats moyens) et en particulier les propriétés à froid.
Les conditions opératoires dans lesquelles est effectuée cette étape (f) sont :
La pression est maintenue entre 2 et 150 bars et de préférence entre 5 et 100 bars et avantageusement de 10 à 90 bars, la vitesse spatiale est comprise entre 0,1 h⁻¹ et 10 h⁻¹ et de préférence entre 0,2 et 7h⁻¹ est avantageusement entre 0,5 et 5,0h⁻¹. Le taux d'hydrogène est compris entre 100 et 2000 Normaux litres d'hydrogène par litre de charge et par heure et préférentiellement entre 150 et 1500 litres d'hydrogène par litre de charge.
La température utilisée dans cette étape est comprise entre 200 et 450°C et préférentiellement de 250°C à 450°C avantageusement de 300 à 450°C, et encore plus avantageusement supérieure à 320°C ou par exemple entre 320-420°C.
L'exploitant ajustera les conditions opératoires sur le premier et second catalyseur d'hydrocraquage/hydroisomérisation de façon à obtenir les qualités de produits et les rendements souhaités.
Ainsi, de façon générale, sur le premier catalyseur, la conversion par passe en produits à points d'ébullition supérieurs ou égaux à 150°C en des produits à points d'ébullition inférieurs à 150°C est inférieure à 50%pds, de préférence inférieure à 30% pds. Ces conditions permettent au particulier d'ajuster le rapport kérosène/gazole produits ainsi que les produits à froid des distillats moyens, et plus particulièrement du kérosène.
Egalement de façon générale, sur le second catalyseur, lorsque la fraction résiduelle est traitée, la conversion par passe en produits à points d'ébullition supérieurs ou égaux à 370°C en produits à points d'ébullition inférieurs à 370°C, est supérieure à 40% pds, de préférence supérieure à 50% pds, ou mieux à 60% pds. Il peut même s'avérer avantageux d'avoir des conversions d'au moins 80% pds.
Lorsque une partie du kérosène et/ou du gazole est traitée sur le second catalyseur, la conversion par passe en produits à points d'ébullition supérieurs ou égaux à 150°C en des produits à points d'ébullition inférieurs à 150°C est inférieure à 50% pds, de préférence inférieure à 30% pds.
De façon générale les conditions opérations appliquées dans les réacteurs (8) et (16) peuvent être différentes ou identiques. De façon préférée les conditions opératoires utilisées dans les 2 réacteurs d'hydroisomérisation / hydrocraquage sont choisies différentes en termes de pression opératoire, température, temps de contact (wh) et rapport H₂/charge. Ce mode de réalisation permet à l'exploitant d'ajuster les qualités et/ou rendements en kérosène et gazole.
L'effluent issu du réacteur (16) est ensuite envoyé via la ligne (17) dans le train distillation de manière à séparer les produits de conversion, essence, kérosène et gazole.
Sur la figure 4, il est représenté un mode de réalisation avec la fraction résiduelle (conduite 14) passant dans la zone (16) d'hydroisomérisation / hydrocraquage (étape f), l'effluent obtenu étant envoyé (conduite 17) dans la zone (9) de séparation.
Avantageusement, dans le même temps, le kérosène et/ou le gazole peut être en partie recyclé (conduite 18) dans la zone (8) d'hydroisomérisation / hydrocraquage (étape d) sur le premier catalyseur.
Sur la figure 5, une partie du kérosène et/ou du gazole produits passent dans la zone (16) d'hydroisomérisation / hydrocraquage (étape f), l'effluent obtenu étant envoyé (conduite 17) dans la zone (9) de séparation.
Dans le même temps, la fraction résiduelle (conduite 14) est recyclée dans la zone (8) d'hydroisomérisation / hydrocraquage (étape d) sur le premier catalyseur.
On a pu constater qu'il est avantageux de recycler une partie du kérosène sur un catalyseur d'hydrocraquage / hydroisomérisation pour améliorer ses propriétés à froid.
Sur les figures, on a représenté seulement le recyclage du kérosène. Il va sans dire qu'on peut aussi bien recycler une partie du gazole (séparément ou avec le kérosène) et de préférence sur le même catalyseur que le kérosène.

L'invention n'est pas limitée à ces modes de réalisation.

### Les produits obtenus

Le(s) gazole(s) obtenu (s) présente(nt) un point d'écoulement d'au plus 0°C, généralement inférieur à -10°C et souvent inférieur à -15°C. L'indice de cétane est supérieur à 60, généralement supérieur à 65, souvent supérieur à 70.
Le(s) kérosène(s) obtenu(s) présente(nt) un point de congélation d'au plus -35°C, généralement inférieur à -40°C. Le point de fumée est supérieur à 25 mm, généralement supérieur à 30 mm. Dans ce procédé, la production d'essence (non recherchée) est la plus faible possible. Le rendement en essence sera toujours inférieur à 50% pds, de préférence inférieur à 40% pds, avantageusement inférieur à 30% pds ou encore à 20% pds ou même à 15% pds.

### Exemple 1 : Caractéristiques du support alumine-silice (SA1)

Le support SA1 est une alumine-silice qui a une composition chimique en poids de 60% de Al₂O₃ et 40% de SiO₂. Son rapport Si/Al est de 0.6. Sa teneur en sodium est de l'ordre de 100-120 ppm en poids. Les extrudés sont cylindriques de diamètre 1.6 mm. Sa surface spécifique est de 320 m²/g. Son volume poreux total, mesuré par porosimétrie au mercure est 0.83 cm³/g. La distribution poreuse est bimodale. Dans le domaine des mésopores, un large pic entre 4 et 15 nm avec un maximum à 7 nm est observé. Pour le support, les macropores, dont le diamètre est plus grand que 50 nm , représentent environ 40% du volume poreux total.

### Exemple 2 : Préparation de catalyseur d'hydrocraquage utilisable dans le procédé selon l'invention (C1)

Le catalyseur C1 est obtenu par imprégnation à sec du support SiAl-1 (sous forme d'extrudés), préparé dans l'exemple 1 par une solution d'acide hexachloroplatinique H₂PtCl₆ dissous dans un volume de solution correspondant au volume poreux total à imprégner. Les extrudés imprégnés sont ensuite calcinés à 550°C sous air pendant 4 heures. La teneur en platine est de 0,48% poids et sa dispersion mesurée par titrage H₂-0₂ est de 82% et sa répartition est uniforme dans les extrudés.

### Exemple 3 : Catalyseur C2

Le catalyseur C2 est un catalyseur vendu par la société Axens sous la référence commerciale ACT961. Ce catalyseur est un catalyseur NiMo supporté sur alumine gamma macroporeuse. Le volume macroporeux supérieur à 50 nm est supérieur à 0.1 cm³/g.

### Exemple 4 : Catalyser C3

Le catalyseur de lit de garde C3 est un catalyseur vendu par la société Axens sous la référence commerciale ACT077. Ce lit de garde est à base d'alumine réfractaire avec une surface de quelques m2/g. Le volume macroporeux supérieur à 1 micron est supérieur à 0.2 microns.

### Exemple 5 : Evaluation du catalyseur C1 en hydrocraquage d'une charge paraffinique issue de la synthèse Fischer-Tropsch après passage sur catalyseur C2 et C3

Les catalyseurs dont la préparation est décrite dans l'exemple 2 sont utilisés pour réaliser l'hydrocraquage d'une charge paraffinique issue d'une unité Fischer-Tropsch dont les principales caractéristiques sont données ci-après :

| | |
|---|---|
| Densité à 20°C | 0,79 |

| **Distillation simulée DS** | |
|---|---|
| DS : Point initial | 170 |
| DS : 10%p°C | 197 |
| DS : 50%p°C | 310 |
| DS : 90%p°C | 495 |
| DS : Point final °C | 590 |
| Teneur en fraction 370°C+ (%pds) | 33 |

La charge contient en outre des particules minérales dont la composition est la suivante :
- Si total (ppm): 14.1
- Co (fines, ppm) : 21.1
- Al (fines, ppm): 94-102

La charge contient également 300 ppm de silicium organométalliques.

Les catalyseurs C1, C2, C3 sont mis en oeuvre selon le procédé de l'invention en utilisant une unité pilote comportant 2 réacteurs à lit fixe traversé, les fluides circulent de bas en haut (up-flow). Le premier réacteur contient les catalyseurs C2 et/ou C3 (lit de garde multifonctionnel). Le deuxième réacteur contient le catalyseur d'hydocraquage/hydroisomérisation C1. L'effluent issu du réacteur 1 est soumis à un flash chaud pour éliminer l'eau formé sur le premier réacteur.

Préalablement au test d'hydrocraquage, les catalyseurs sont réduits à 50 bars, à 450°C sous hydrogène pur.

Après réduction, le test catalytique s'effectue dans les conditions suivantes :

| | |
|---|---|
| Pression totale : | 50 MPa |

T=320°C
Rapport H2 sur charge de 800 normaux litres/litre de charge
La vitesse spatiale (VVH) est égale à 1 h-1.

Les performances catalytiques sont mesurées par le dosage des n-paraffines. Les performances catalytiques sont exprimées par la conversion nette en C22+.

La conversion nette C22+est prise égale à :
CN C22+ = [(% de C22+ effluents)- (% de C22+ charge)]/ [100- (% de C22+ charge)]] Les rendements sont exprimés en C5-C9, C10 -C22 et C22+.

Les performances catalytiques obtenues sont données dans les tableaux 1 et 2 ci-après après 150 heures de test.

Les configurations catalytiques sont respectivement :

**Tableau 1 : Conversions nettes de la faction C22+-**

| | Conversion nette C22+ |
|---|---|
| C1 | 38% |
| C2 +C1 | 68% |
| C3 + C1 | 50% |
| C3+ C2+ C1 | 70% |

**Tableau 2 : Rendements des produits formés :**

| | Rendements (% poids) C5-C9 | Rendements (% poids) C10-C22 | Rendements (% poids) C22+. |
|---|---|---|---|
| C1 | 8.3 | 71 | 20 |
| C2+ C1 | 11.8 | 77.5 | 10.6 |
| C3 | 9.3 | 74 | 16.7 |
| C3+ C2+ C1 | 11.5 | 78.5 | 10 |

Ces résultats, montrent (tableaux 1 et 2) que l'utilisation des catalyseurs et lit de garde selon l'invention et dans un procédé selon l'invention permettent par hydrocraquage d'une charge paraffinique issue du procédé de synthèse Fischer-Tropsch, contenant des particules minérales et du silicium sous forme organométalliques, d'obtenir de très bons rendements en distillats moyens, coupes 150-250 (kérosène) et 250-370°C (gazole). Plus particulièrement, la combinaison d'un catalyseur NiMo macroporeux et d'un lit de garde macroporeux est très intéressant.

## Revendications

1. Procédé amélioré de production de distillats moyens à partir d'une charge paraffinique produite par synthèse Fischer-Tropsch comprenant en amont de l'étape d'hydrocraquage/hydroisomérisation une étape d'hydrotraitement et épuration et/ou décontamination par passage sur au moins un lit de garde en présence d'hydrogène à une température comprise entre 100 et 350°C, une pression totale comprise entre 5 et 150 bars, à un débit d'hydrogène tel que le rapport volumique hydrogène/hydrocarbures soit compris entre 100 et 3000 NI/l/h, avec un débit de charge tel que la vitesse volumique horaire est comprise entre 0,1 et 10 h⁻¹, dans lequel le lit de garde comprend au moins un catalyseur imprégné par une phase active hydro-déshydrogénante à base de Nickel et de Molybdène sur un support alumine et ayant les caractéristiques suivantes :
un volume mercure macroporeux pour un diamètre moyen à 50 nm supérieur à 0,1 cm³/g et un volume mercure total supérieur à 0,60 cm³/g, mesurés par intrusion au porosimètre à mercure selon la norme ASTM D4284-83 à une pression maximale de 4000 bar, utilisant une tension de surface de 484 dyne/cm et un angle de contact pour les supports alumine-silice amorphe de 140°.

2. Procédé de production de distillats moyens à partir d'une charge paraffinique produite par synthèse Fischer-Tropsch selon la revendication 1 dans lequel le lit de garde comprend également au moins un catalyseur ayant les caractéristiques suivantes :
- le volume mercure pour un diamètre de pores supérieur à 1 micron est supérieur à 0.2 cm³/g et de préférence supérieur à 0.5 cm³/g,
- le volume mercure pour un diamètre de pores supérieur à 10 microns est supérieur à 0.25 cm³/g;
- lesdits volumes étant mesurés par intrusion au porosimètre à mercure selon la norme ASTM D4284-83 à une pression maximale de 4000 bar, utilisant une tension de surface de 484 dyne/cm et un angle de contact pour les supports alumine-silice amorphe de 140°.

3. Procédé de production de distillats moyens à partir d'une charge paraffinique produite par synthèse Fischer-Tropsch selon les revendications 1 à 2 dans lequel le lit de garde comprend également au moins un catalyseur ayant les caractéristiques suivantes :
- le volume mercure pour un diamètre de pores supérieur à 50 nm est supérieur à 0,25 cm³/g,
- le volume mercure pour un diamètre de pores supérieur à 100 nm est supérieur à 0,15 cm³/g et
- le volume poreux total est supérieur à 0,80 cm³/g ;
- lesdits volumes étant mesurés par intrusion au porosimètre à mercure selon la norme ASTM D4284-83 à une pression maximale de 4000 bar, utilisant une tension de surface de 484 dyne/cm et un angle de contact pour les supports alumine-silice amorphe de 140°.

4. Procédé de production de distillats moyens à partir d'une charge paraffinique produite par synthèse Fischer-Tropsch selon les revendications 1 à 3 dans lequel les catalyseurs d'hydrotraitement sont superposés dans au moins deux lits différents de hauteurs variable.

5. Procédé de production de distillats moyens à partir d'une charge paraffinique produite par synthèse Fischer-Tropsch selon les revendications 1 à 2 et 4 dans lequel ledit catalyseur imprégné de phase active selon la revendication 1 et le catalyseur selon la revendication 2 sont associés dans un lit mixte ou un lit combiné.

6. Procédé de production de distillats moyens à partir d'une charge paraffinique produite par synthèse Fischer-Tropsch selon la revendication 5 dans lequel ledit catalyseur imprégné de phase active selon la revendication 1 constitue la majorité du lit de garde et le catalyseur selon la revendication 2 est ajouté en complément de 0 à 50% en volume par rapport au premier catalyseur imprégné.

7. Procédé de production de distillats moyens à partir d'une charge paraffinique produite par synthèse Fischer-Tropsch selon l'une des revendications précédentes dans lequel lesdits catalyseurs ayant le plus fort taux de vide sont utilisés dans le ou les premiers lits catalytiques en entrée de réacteur catalytique.

8. Procédé de production de distillats moyens à partir d'une charge paraffinique produite par synthèse Fischer-Tropsch selon la revendication 1 à 7 dans lequel le catalyseur d'hydrocraquage / hydroisomérisation comprend:
- au moins un élément hydro-déshydrogénant choisi dans le groupe formé par les éléments du groupe VIB et du groupe VIII de la classification périodique,
- de 0 à 6% de phosphore comme élément dopant, (en combinaison éventuellement avec bore et/ou silicium),
- et un support non zéolitique à base d'alumine-silice
ladite alumine-silice présentant les caractéristiques suivantes :
- un pourcentage de silice compris entre 5 et 95 % poids, de préférence entre 10 et 80%, de manière plus préférée entre 20 et 60 % et de manière très préférée entre 30 et 50%,
- un contenu en sodium inférieur à 0.03% poids,
- un volume poreux total mesuré par porosimétrie au mercure compris entre 0.45 et 1.2 ml/g,
- une porosité telle que :
i) le volume des mésopores avec un diamètre compris entre 40 et 150 A et un diamètre moyen poreux compris entre 80 et 140 A (de préférence entre 80 et 120 A) représente 30-80% du volume poreux total mesuré par porosimétrie au mercure ;
ii) le volume des macropores avec un diamètre supérieur à 500 A représente 20-80% du volume poreux total mesuré par porosimétrie au mercure ;
lesdits volumes étant mesurés par intrusion au porosimètre à mercure selon la norme ASTM D4284-83 à une pression maximale de 4000 bar, utilisant une tension de surface de 484 dyne/cm et un angle de contact pour les supports alumine-silice amorphe de 140°.
- une surface spécifique BET comprise entre 100 et 550 m²/g , de préférence comprise entre 150 et 500 m²/g, de manière préférée inférieure à 350 m²/g et de manière encore plus préférée inférieure à 250 m²/g,
- un diagramme de diffraction X qui contient au moins les raies principales caractéristiques d'au moins une des alumines de transition comprise dans le groupe composé par les alumines alpha, rhô, khi, êta, gamma, kappa, thêta et delta.

9. Procédé de production de distillats moyens à partir d'une charge paraffinique produite par synthèse Fischer-Tropsch selon l'une des revendications 1 à 8 comprenant les étapes successives suivantes :
a) séparation d'une seule fraction dite lourde à point d'ébullition initial compris entre 120-200°C,
b) hydrotraitement/épuration d'une partie au moins de ladite fraction lourde par passage sur ledit lit de garde,
c) fractionnement en au moins 3 fractions :
- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.
d) passage d'une partie au moins de ladite fraction intermédiaire sur un catalyseur amorphe d'hydroisomérisation / hydrocraquage,
e) passage sur un catalyseur amorphe d'hydroisomérisation / hydrocraquage, d'une partie au moins de ladite fraction lourde,
f) distillation des fractions hydrocraquées / hydroisomérisées pour obtenir des distillats moyens, et recyclage de la fraction résiduelle bouillant au-dessus desdits distillats moyens dans l'étape (e) sur le catalyseur amorphe traitant la fraction lourde.

10. Procédé de production de distillats moyens à partir d'une charge paraffinique produite par synthèse Fischer-Tropsch selon l'une des revendications 1 à 8 comprenant les étapes successives suivantes :
a) séparation d'au moins une fraction légère de la charge de façon à obtenir une seule fraction dite lourde à point d'ébullition initial compris entre 120-200°C,
b) hydrotraitement/épuration sur ledit lit de garde de ladite fraction lourde, éventuellement suivi d'une étape
c) d'enlèvement d'au moins une partie de l'eau,
d) passage sur un catalyseur d'hydrocraquage/hydroisomérisation d'une partie au moins de ladite fraction hydrotraitée, la conversion sur le catalyseur d'hydrosiomérisation/hydrocraquage des produits à points d'ébullition supérieurs ou égaux à 370°C en produits à points d'ébullition inférieures à 370°C est supérieure à 80% pds,
e) distillation de la fraction hydrocraquée/hydroisomérisée pour obtenir des distillats moyens, et recyclage dans l'étape d) de la fraction résiduelle bouillant au-dessus desdits distillats moyens.

11. Procédé de production de distillats moyens à partir d'une charge paraffinique produite par synthèse Fischer-Tropsch selon l'une des revendications 1 à 8 comprenant les étapes successives suivantes :
a) Fractionnement (étape a) de la charge en au moins 3 fractions :
- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.
b) Hydrotraitement/épuration sur ledit lit de garde (étape b) d'au moins une partie de ladite fraction intermédiaire, puis passage (étape d) dans un procédé de traitement d'au moins une partie de la fraction hydrotraitée sur un catalyseur amorphe d'hydrocraquage/hydroisomérisation.
f) Passage (étape f) dans un procédé de traitement d'une partie au moins de ladite fraction lourde sur un catalyseur amorphe d'hydrocraquage/hydroisomérisation avec une conversion des produits 370°C⁺ en produits 370°C moins supérieure à 80% poids.
e) et g) Distiliation (étapes e et g) d'au moins une partie des fractions hydrocraquées / hydroisomérisées pour obtenir des distillats moyens.

12. Procédé de production de distillats moyens à partir d'une charge paraffinique produite par synthèse Fischer-Tropsch selon l'une des revendications 1 à 8 comprenant les étapes successives suivantes :
a) éventuel fractionnement de la charge en au moins une fraction lourde à point d'ébullition initial compris entre 120 et 200°C, et au moins une fraction légère bouillant en-dessous de ladite fraction lourde,
b) hydrotraitement/épuration d'une partie au moins de la charge ou de la fraction lourde sur ledit lit de garde, éventuellement suivi (étape c) d'éiimination d'au moins une partie de l'eau,
d) passage d'une partie au moins de l'effluent ou de la fraction éventuellement hydrotraité dans un procédé selon l'invention sur un premier catalyseur d'hydroisomérisation / hydrocraquage sans halogène ajouté et contenant au moins un métal noble du groupe VIII,
e) distillation de l'effluent hydroisomérisé / hydrocraqué pour obtenir des distillats moyens (kérosène, gasoil) et une fraction résiduelle bouillant au-dessus des distillats moyens,
f) sur un second catalyseur d'hydroisomérisation / hydrocraquage sans halogène ajouté et contenant au moins un métal noble du groupe VIII, passage d'au moins une partie de ladite fraction lourde résiduelle et/ou d'une partie desdits distillats moyens, et distillation de l'effluent résultant pour obtenir des distillats moyens.

## Patentansprüche

1. Verbessertes Verfahren zum Herstellen von Mitteldestillaten aus einer Paraffinbeschickung, hergestellt durch Fischer-Tropsch-Synthese, umfassend stromaufwärts des Schritts zum Hydro-kracken/Hydroisomerisieren einen Schritt zum Hydrobehandein und Reinigen und/oder zum Dekontaminieren durch Übertragen auf mindestens ein Schutzbett in Gegenwart von Wasserstoff bei einer Temperatur im Bereich zwischen 100 und 350 °C, einem Gesamtdruck im Bereich zwischen 5 und 150 Bar, einem Wasserstoffdurchfluss, so dass das Volumenverhältnis Wasserstoff/Kohlenwasserstoffe im Bereich zwischen 100 und 3.000 NI/l/h liegt, mit einer derartigen Durchflussmenge, dass die Volumengeschwindigkeit pro Stunde im Bereich zwischen 0,1 und 10 h⁻¹ liegt, wobei das Schutzbett mindestens einen Katalysator umfasst, der mit einer hydro-dehydrierenden aktiven Phase auf Nickel- und Molybdänbasis auf einen Aluminiumoxid-Träger imprägniert ist und der die folgenden Merkmale aufweist:
ein Quecksilber-Makroporenvolumen für einen mittleren Durchmesser bei 50 nm größer als 0,1 cm³/g und ein Gesamt-Quecksilbervolumen größer als 0,60 cm³/g, das durch Eindringen mittels Quecksilberporosimeter gemäß der Norm ASTM D4284-83 bei einem Maximaldruck von 4.000 bar unter Verwendung einer Oberflächenspannung von 484 Dyn/cm und eines Kontaktwinkels für die amorphen Siliciumdioxid-Aluminiumoxid-Träger von 140° gemessen wird.

2. Verfahren zum Herstellen von Mitteldestillaten aus einer Paraffinbeschickung, hergestellt durch Fischer-Tropsch-Synthese nach Anspruch 1, wobei das Schutzbett außerdem mindestens einen Katalysator umfasst, der die folgenden Merkmale aufweist:
- das Quecksilbervolumen für einen Porendurchmesser größer als 1 Mikron ist größer als 0,2 cm³/g und bevorzugt größer als 0,5 cm³/g,
- das Quecksilbervolumen für einen Porendurchmesser größer als 10 Mikron ist größer als 0,25 cm³/g,
- wobei die Volumen durch das Eindringen mittels Quecksilberporosimeter gemäß der Norm ASTM D4284-83 bei einem Maximaldruck von 4.000 bar unter Verwendung einer Oberflächenspannung von 484 Dyn/cm und eines Kontaktwinkels für die amorphen Siliciumdioxid-Aluminiumoxid-Träger von 140° gemessen werden.

3. Verfahren zum Herstellen von Mitteldestillaten aus einer Paraffinbeschickung, hergestellt durch Fischer-Tropsch-Synthese nach den Ansprüchen 1 bis 2, wobei das Schutzbett außerdem mindestens einen Katalysator umfasst, der die folgenden Merkmale aufweist:
- das Quecksilbervolumen für einen Porendurchmesser größer als 50 nm ist größer als 0,25 cm³/g,
- das Quecksilbervolumen für einen Porendurchmesser größer als 100 nm ist größer als 0,15 cm³/g und
- das Gesamtporenvolumen ist größer als 0,80 cm³/g ;
- wobei die Volumen durch das Eindringen mittels Quecksilberporosimeter gemäß der Norm ASTM D4284-83 bei einem Maximaldruck von 4.000 bar unter Verwendung einer Oberflächenspannung von 484 Dyn/cm und eines Kontaktwinkels für die amorphen Siliciumdioxid-Aluminiumoxid-Träger von 140° gemessen werden.

4. Verfahren zum Herstellen von Mitteldestillaten aus einer Paraffinbeschickung, hergestellt durch Fischer-Tropsch-Synthese nach den Ansprüchen 1 bis 3, wobei die Hydrobehandlungskatalysatoren in mindestens zwei verschiedenen Betten mit variablen Höhen übereinander angeordnet sind.

5. Verfahren zum Herstellen von Mitteldestillaten aus einer Paraffinbeschickung, hergestellt durch Fischer-Tropsch-Synthese nach den Ansprüchen 1 bis 2 und 4, wobei der mit aktiver Phase imprägnierte Katalysator nach Anspruch 1 und der Katalysator nach Anspruch 2 in einem Mischbett oder einem Kombibett kombiniert sind.

6. Verfahren zum Herstellen von Mitteldestillaten aus einer Paraffinbeschickung, hergestellt durch Fischer-Tropsch-Synthese nach Anspruch 5, wobei der mit aktiver Phase imprägnierte Katalysator nach Anspruch 1 den Großteil des Schutzbetts bildet und der Katalysator nach Anspruch 2 ergänzend mit 0 bis 50 Vol.-%, bezogen auf den imprägnierten ersten Katalysator, zugegeben wird.

7. Verfahren zum Herstellen von Mitteldestillaten aus einer Paraffinbeschickung, hergestellt durch Fischer-Tropsch-Synthese nach einem der vorhergehenden Ansprüche, wobei die Katalysatoren, die den höchsten Porositätsgrad aufweisen, in dem oder den ersten Katalysebett(en) am Eingang des Katalysereaktors verwendet werden.

8. Verfahren zum Herstellen von Mitteldestillaten aus einer Paraffinbeschickung, hergestellt durch Fischer-Tropsch-Synthese nach Anspruch 1 bis 7, wobei der Katalysators zum Hydrokracken/Hydroisomerisieren umfasst:
- mindestens ein hydro-dehydrierendes Element, ausgewählt aus der Gruppe, gebildet aus den Elementen der Gruppe VIB der Gruppe VIII des Periodensystems der Elemente,
- 0 bis 6 % Phosphor als dotierendem Element, (gegebenenfalls in Kombination mit Bor und/oder Silicium),
- und einen nicht zeolithischen Träger auf der Basis von Aluminiumoxid-Siliciumdioxid, wobei das Aluminiumoxid-Siliciumdioxid die folgenden Merkmale aufweist:
- einen Prozentanteil an Siliciumdioxid im Bereich zwischen 5 und 95 Gew.-%, bevorzugt zwischen 10 und 80 Gew.-%, besonders bevorzugt zwischen 20 und 60 Gew.-% und ganz besonders bevorzugt zwischen 30 und 50 Gew.-%,
- einen Natriumgehalt von weniger als 0,03 Gew.-%,
- ein Gesamtporenvolumen, gemessen mittels Quecksilber-Porosimetrie, im Bereich zwischen 0,45 und 1,2 ml/g,
- eine Porosität, so dass:
i) das Volumen der Mesoporen mit einem Durchmesser im Bereich 40 und 150 A und einem mittleren Porendurchmesser im Bereich zwischen 80 und 140 A (bevorzugt zwischen 80 und 120 A) 30 bis 80 % des Gesamtporenvolumens, gemessen mittels Quecksilber-Porosimetrie, darstellt,
ii) das Volumen der Makroporen mit einem Durchmesser größer als 500 A 20 bis 80 % des Gesamtporenvolumens, gemessen mittels Quecksilber-Porosimetrie, darstellt;
wobei die Volumen durch das Eindringen mittels Quecksilberporosimeter gemäß der Norm ASTM D4284-83 bei einem Maximaldruck von 4.000 bar unter Verwendung einer Oberflächenspannung von 484 Dyn/cm und eines Kontaktwinkels für die amorphen Siliciumdioxid-Aluminiumoxid-Träger von 140° gemessen werden,
- eine spezifische BET-Oberfläche im Bereich zwischen 100 und 550 m²/g, bevorzugt im Bereich zwischen 150 und 500 m²/g, bevorzugt kleiner als 350 m²/g und noch stärker bevorzugt kleiner als 250 m²/g,
- ein Röntgendiffraktionsdiagramm, das mindestens die charakteristischen Hauptlinien von mindestens einem der Übergangsaluminiumoxide enthält, die die Gruppe, bestehend aus den alpha-, rho-, chi-, eta-, gamma-, kappa-, theta- und delta-Aluminiumoxiden, umfasst.

9. Verfahren zum Herstellen von Mitteldestillaten aus einer Paraffinbeschickung, hergestellt durch Fischer-Tropsch-Synthese, nach einem der Ansprüche 1 bis 8, das die nachfolgenden aufeinander folgenden Schritte umfasst:
a) Trennen einer einzigen so genannten schweren Fraktion mit einem Anfangssiedepunkt im Bereich zwischen 120 und 200 °C,
b) Hydrobehandeln/Reinigen mindestens eines Teils der schweren Fraktion durch Übertragen auf ein Schutzbett,
c) Fraktionieren in mindestens 3 Fraktionen:
- mindestens eine Zwischenfraktion mit einem Anfangssiedepunkt T1 im Bereich zwischen 120 und 200 °C und einem Endsiedepunkt T2 oberhalb von 300 °C und unterhalb von 410 °C,
- mindestens eine leichte Fraktion, die unterhalb der Zwischenfraktion siedet,
- mindestens eine schwere Fraktion, die oberhalb der Zwischenfraktion siedet,
d) Übertragen mindestens eines Teils der Zwischenfraktion auf einen amorphen Katalysator zum Hydroisomerisieren/Hydrokracken,
e) Übertragen mindestens eines Teils der schweren Fraktion auf einen amorphen Katalysator zum Hydroisomerisieren/Hydrokracken,
f) Destillieren der hydrogekrackten/hydroisomerisierten Fraktionen, um Mitteldestillate zu erhalten, und Rückführen der Restfraktion, die oberhalb der Mitteldestillate siedet, in Schritt (e) auf den amorphen Katalysator, der die schwere Fraktion behandelt.

10. Verfahren zum Herstellen von Mitteldestillaten aus einer Paraffinbeschickung, hergestellt durch Fischer-Tropsch-Synthese, nach einem der Ansprüche 1 bis 8, das die nachfolgenden aufeinander folgenden Schritte umfasst:
a) Trennen mindestens einer leichten Fraktion aus der Beschickung, um eine einzige sogenannte schwere Fraktion mit einem Anfangssiedepunkt im Bereich zwischen 120 bis 200 °C zu erhalten,
b) Hydrobehandeln/Reinigen der schweren Fraktion auf einem Schutzbett, gegebenenfalls gefolgt von einem Schritt
c) zum Entfernen mindestens eines Teils des Wassers,
d) zum Übertragen mindestens eines Teils der hydrobehandelten Fraktion auf einen Katalysator zum Hydrokracken/Hydroisomerisieren, wobei die Umwandlung der Produkte mit Siedepunkten größer oder gleich 370 °C in Produkte mit Siedepunkten kleiner als 370 °C auf dem Katalysator zum Hydroisomerisieren/Hydrokracken größer als 80 Gew.-% ist,
e) Destillieren der hydrogekrackten/hydroisomerisierten Fraktion, um Mitteldestillate zu erhalten, und Rückführen in Schritt d) der Restfraktion, die oberhalb der Mitteldestillate siedet.

11. Verfahren zum Herstellen von Mitteldestillaten aus einer Paraffinbeschickung, hergestellt durch Fischer-Tropsch-Synthese, nach einem der Ansprüche 1 bis 8, das die nachfolgenden aufeinander folgenden Schritte umfasst:
a) Fraktionieren (Schritt a) der Beschickung in mindestens 3 Fraktionen:
- mindestens eine Zwischenfraktion mit einem Anfangssiedepunkt T1 im Bereich zwischen 120 und 200 °C und einem Endsiedepunkt T2 oberhalb von 300 °C und unterhalb von 410 °C,
- mindestens eine leichte Fraktion, die unterhalb der Zwischenfraktion siedet,
- mindestens eine schwere Fraktion, die oberhalb der Zwischenfraktion siedet,
b) Hydrobehandeln/Reinigen auf einem Schutzbett (Schritt b) mindestens eines Teils der Zwischenfraktion, dann Übertragen (Schritt d) in ein Verfahren zum Behandeln mindestens eines Teils der hydrobehandelten Fraktion auf einem amorphen Katalysator zum Hydrokracken/Hydroisomerisieren.
f) Übertragen (Schritt f) in ein Verfahren zum Behandeln mindestens eines Teils der schweren Fraktion auf einem amorphen Katalysator zum Hydrokracken/Hydroisomerisieren mit einer Umwandlung der 370°C⁺-Produkte in 370°C-minus-Produkte von mehr als 80 Gew.-%.
e) und g) Destillieren (Schritte e und g) mindestens eines Teils der hydrogekrackten/hydroisomerisierten Fraktionen, um Mitteldestillate zu erhalten.

12. Verfahren zum Herstellen von Mitteldestillaten aus einer Paraffinbeschickung, hergestellt durch Fischer-Tropsch-Synthese, nach einem der Ansprüche 1 bis 8, das die nachfolgenden aufeinander folgenden Schritte umfasst:
a) gegebenenfalls Fraktionieren der Beschickung in mindestens eine schwere Fraktion mit einem Anfangssiedepunkt im Bereich zwischen 120 und 200 °C und mindestens eine leichte Fraktion, die unterhalb der schweren Fraktion siedet,
b) Hydrobehandeln/Reinigen mindestens eines Teils der Beschickung oder der schweren Fraktion auf einem Schutzbett, gegebenenfalls gefolgt (Schritt c) vom Entfernen mindestens eines Teils des Wassers,
d) Übertragen mindestens eines Teils des Abflusses oder der gegebenenfalls hydrobehandelten Fraktion in ein erfindungsgemäßes Verfahren auf einen ersten Katalysator zum Hydroisomerisieren/Hydrokracken ohne zugegebenes Halogen und der mindestens ein Edelmetall der Gruppe VIII enthält,
e) Destillieren des hydroisomerisierten/hydrogekrackten Abflusses, um Mitteldestillate (Kerosin, Gasöl) und eine Restfraktion zu erhalten, die oberhalb der Mitteldestillate siedet,
f) Übertragen mindestens eines Teils der schweren Restfraktion und/oder eines Teils der Mitteldestillate auf einen zweiten Katalysator zum Hydroisomerisieren/Hydrokracken ohne zugegebenes Halogen, der mindestens ein Edelmetall der Gruppe VIII enthält, und Destillieren des resultierenden Abflusses, um Mitteldestillate zu erhalten.

## Claims

1. An improved process for producing middle distillates from a paraffinic feed produced by Fischer-Tropsch synthesis comprising, upstream of the hydrocracking/hydroisomerization step, a step for hydrotreatment and purification and/or decontamination by passage over at least one guard bed in presence of hydrogen, with a temperature in the range 100°C to 350°C, a total pressure in the range 5 to 150 bars, an hydrogen rate such that the hydrogen/hydrocarbon volume ratio is in the range 100 to 3000 NI/l/h, a flow rate of the feed such that the hourly space velocity is in the range 0.1 to 10 h⁻¹, in which the guard bed comprises at least one catalyst impregnated with a hydrodehydrogenating active phase based on nickel and molybdenum on alumina support and having the following characteristics:
• a macroporous mercury volume for a mean diameter of 50 nm which is more than 0.1 cm³/g,
• and a total mercury volume of more than 0.60 cm³/g,
measured by mercury porosimetric intrusion in accordance with ASTM D4284-83 at a maximum pressure of 4000 bars, using a surface tension of 484 dynes/cm and a contact angle for amorphous silica-alumina catalysts of 140°.

2. A process for producing middle distillates from a paraffinic feed produced by Fischer-Tropsch synthesis according to claims 1, in which the guard bed comprises also at least one catalyst having the following characteristics:
• the mercury volume for a pore diameter of more than 1 micron is more than 0.2 cm³/g, preferably more than 0.5 cm³/g;
• the mercury volume for a pore diameter of more than 10 microns is more than 0.25 cm³/g,
said volumes being measured by mercury porosimetric intrusion in accordance with ASTM D4284-83 at a maximum pressure of 4000 bars, using a surface tension of 484 dynes/cm and a contact angle for amorphous silica-alumina catalysts of 140°.

3. A process for producing middle distillates from a paraffinic feed produced by Fischer-Tropsch synthesis according to claims 1 to 2, in which the guard bed comprises also at least one catalyst having the following characteristics:
• the mercury volume for a pore diameter of more than 50 nm is more than 0.25 cm³/g;
• the mercury volume for a pore diameter of more than 100 nm is more than 0.15 cm³/g, and
• the total pore volume is more than 0.80 cm³/g,
said volumes being measured by mercury porosimetric intrusion in accordance with ASTM D4284-83 at a maximum pressure of 4000 bars, using a surface tension of 484 dynes/cm and a contact angle for amorphous silica-alumina catalysts of 140°.

4. A process for producing middle distillates from a paraffinic feed produced by Fischer-Tropsch synthesis according to claims 1 to 3, in which the hydrotreatment catalysts are superimposed in at least two different beds of varying heights.

5. A process for producing middle distillates from a paraffinic feed produced by Fischer-Tropsch synthesis according to claims 1 to 2 and 4 in which the catalyst impregnated with active phase according to claim 1 and the catalyst according to claim 2 are associated with a mixed or combined bed.

6. A process for producing middle distillates from a paraffinic feed produced by Fischer-Tropsch synthesis according to claim 5, in which the catalyst impregnated with active phase according to claim 1 constitutes the majority of the guard bed and the catalyst according to claim 1 is added as a complement in an amount of 0 to 50% by volume with respect to the first impregnated catalyst.

7. A process for producing middle distillates from a paraffinic feed produced by Fischer-Tropsch synthesis according to preceding claims, in which said catalysts with the highest void ratio are used in the first catalytic bed or beds at the inlet to the catalytic reactor.

8. A process for producing middle distillates from a paraffinic feed produced by Fischer-Tropsch synthesis according to claims 1 to 7, in which the hydrocracking/hydroisomerization catalyst comprises:
• at least one hydrodehydrogenating element selected from the group formed by elements from group VIB and group VIII of the periodic table;
• 0% to 6% of phosphorus as a doping element (optionally in combination with boron and/or silicon);
• and a non-zeolitic support based on alumina-silica;
said alumina-silica having the following characteristics:
• a percentage of silica in the range 5% to 95% by weight, preferably in the range 10% to 80%, more preferably in the range 20% to 60% and still more preferably in the range 30% to 50%;
• a sodium content of less than 0.03% by weight;
• a total pore volume, measured by mercury porosimetry, in the range 0.45 to 1.2 ml/g;
• a porosity such that:
i) the volume of mesopores with a diameter in the range 40 to 150 A and a mean pore diameter in the range 80 to 140 A (preferably in the range 80 to 120 A) represents 30-80% of the total pore volume measured by mercury porosimetry;
ii) the volume of macropores with a diameter of more than 500 A represents 20-80% of the total pore volume measured by mercury porosimetry;
said volumes being measured by mercury porosimetric intrusion in accordance with ASTM D4284-83 at a maximum pressure of 4000 bars, using a surface tension of 484 dynes/cm and a contact angle for amorphous silica-alumina catalysts of 140°,
• a BET specific surface area in the range 100 to 550 m²/g, preferably in the range 150 to 500 m²/g, more preferably less than 350 m²/g and still more preferably less than 250 m²/g;
• an X ray diffraction diagram which contains at least the characteristic principal peaks of at least one transition alumina included in the group composed of alpha, rho, khi, eta, gamma, kappa, theta and delta aluminas.

9. A process for producing middle distillates from a paraffinic feed produced by Fischer-Tropsch synthesis according to one of claims 1 to 8, comprising the following successive steps:
a) separating a single fraction, termed the heavy fraction, with an initial boiling point between 120-200°C;
b) hydrotreating/purifying at least a portion of said heavy fraction by passage over said guard bed;
c) fractionating into at least 3 fractions:
• at least one intermediate fraction having an initial boiling point T1 in the range 120 to 200°C, and an end point T2 of more than 300°C and less than 410°C;
• at least one light fraction boiling below the intermediate fraction;
• at least one heavy fraction boiling above the intermediate fraction;
d) passing at least a portion of said intermediate fraction over an amorphous hydroisomerization/hydrocracking catalyst;
e) passing at least a portion of said heavy fraction over an amorphous hydroisomerization/hydrocracking catalyst;
f) distilling the hydrocracked/hydroisomerized fractions to obtain middle distillates, and recycling the residual fraction boiling above said middle distillates in step e) over the amorphous catalyst treating the heavy fraction.

10. A process for producing middle distillates from a paraffinic feed produced by the Fischer-Tropsch synthesis according to one of claims 1 to 8, comprising the following steps:
a) separating at least a light fraction from the feed to obtain a single fraction, termed the heavy fraction, with an initial boiling point in the range 120-200°C;
b) hydrotreating/purifying said heavy fraction over said guard bed, optionally followed by a step
c) for removing at least a portion of the water;
d) passing at least a portion of said hydrotreated fraction over a hydroisomerization/hydrocracking catalyst, the conversion of products with a boiling point of 370°C or more into products with a boiling point of less than 370°C being more than 80% by weight;
e) distilling the hydrocracked/hydroisomerized fraction to obtain middle distillates, and recycling the residual fraction boiling above said middle distillates to step d).

11. A process for producing middle distillates from a paraffinic feed produced by the Fischer-Tropsch synthesis according to one of claims 1 to 8, comprising the following steps in succession:
a) fractionating (step a)) the feed into at least 3 fractions:
• at least one intermediate fraction having an initial boiling point T1 in the range 120°C to 200°C, and an end point T2 of more than 300°C and less than 410°C;
• at least one light fraction boiling below the intermediate fraction;
• at least one heavy fraction boiling above the intermediate fraction;
b) hydrotreating/purification at least a portion of said intermediate fraction over said guard bed (step b)), then passage (step d)) through a process for treating at least a portion of the hydrotreated fraction over an amorphous hydrocracking/hydroisomerization catalyst;
f) passage (step f)) through a process for treating at least a portion of said heavy fraction over an amorphous hydrocracking/hydroisomerization catalyst with a conversion of products with a boiling point of 370°C or more into products with a boiling point of less than 370°C of more than 80% by weight;
e) and g) distilling (steps e) and g)) at least a portion of the hydrocracked/hydroisomerized fractions to obtain middle distillates.

12. A process for producing middle distillates from a paraffinic feed produced by the Fischer-Tropsch process according to one of claims 1 to 8, comprising the following successive steps:
a) optional fractionation of the feed into at least one heavy fraction with an initial boiling point in the range 120°C to 200°C and at least one light fraction boiling below said heavy fraction;
b) hydrotreatment/purification of at least a portion of the feed or the heavy fraction over a guard bed, optionally followed by a step c) for eliminating at least a portion of the water;
d) passing at least a portion of the effluent or the optionally hydrotreated fraction through a process according to the invention over a first hydroisomerization/hydrocracking catalyst with no added halogen containing at least one noble metal from group VIII;
e) distilling the hydroisomerized/hydrocracked effluent to obtain middle distillates (kerosene, gas oil) and a residual fraction boiling above the middle distillates;
f) passing at least a portion of said residual heavy fraction and/or a portion of said middle distillates, and distillation of the resulting effluent to obtain middle distillates over a second hydroisomerization/hydrocracking catalyst with no added halogen containing at least one noble metal from group VIII.
